# EUROPEAN PATENT SPECIFICATION

(11) **EP 1 439 385 B1**
(45) Date of publication and mention of the grant of the patent: **12.11.2008**
(21) Application number: 03250255.1
(22) Date of filing: 15.01.2003
(51) Int. Cl.: G01N 21/956

(54) **Method and system for fast on-line electro-optical detection of wafer defects**
Verfahren und Gerät zur schnellen on-line und elektro-optischen Defekterkennung an Wafern
Procédé et appareil pour la détection électro-optique rapide et en ligne de défauts de tranches de semi-conducteur

(43) Date of publication of application: 21.07.2004
(73) Proprietor: Negevtech Ltd., Rehovot 76701 (IL)
(72) Inventor: Neumann, Gad, Rehovot 76604 (IL)
(74) Representative: White, Duncan Rohan

(56) References cited:
- EP-A- 0 557 558
- WO-A-00/70332
- US-A- 4 734 923
- US-A- 4 760 265
- US-A1- 2002 037 099
- US-A1- 2002 067 478
- PATENT ABSTRACTS OF JAPAN vol. 017, no. 613 (E-1458), 11 November 1993 (1993-11-11) & JP 05 190421 A (CANON INC), 30 July 1993 (1993-07-30)
- PATENT ABSTRACTS OF JAPAN vol. 1996, no. 10, 31 October 1996 (1996-10-31) & JP 08 154210 A (KUBOTA CORP), 11 June 1996 (1996-06-11)
- PATENT ABSTRACTS OF JAPAN vol. 1999, no. 04, 30 April 1999 (1999-04-30) & JP 11 014357 A (TECHNICAL SYST:KK), 22 January 1999 (1999-01-22)
- PATENT ABSTRACTS OF JAPAN vol. 1997, no. 03, 31 March 1997 (1997-03-31) & JP 08 292361 A (OLYMPUS OPTICAL CO LTD), 5 November 1996 (1996-11-05)

## Description

### FIELD AND BACKGROUND OF THE INVENTION

The present invention relates to methods and systems as defined in claims 1 and 6, preferably for electro-optically detecting fabrication defects, which are random in nature, in semiconductor patterned structures such as a semiconductor wafer featuring integrated circuit dies or chips. In particular, a preferred embodiment of the present invention relates to a method and system for fast on-line electro-optical detection of wafer defects by illuminating with a short light pulse from a pulsed laser, a field of view of an electro-optical camera system having microscopy optics, and imaging, a moving wafer, on to a focal plane assembly (FPA) optically forming a surface of photo-detectors at the focal plane of an optical imaging system, formed from several detector ensembles, each detector ensemble including an array of several two-dimensional matrix photo-detectors, where each two-dimensional matrix photo-detector produces an electronic image featuring a matrix of picture elements (pixels), such that the simultaneously created images from the different matrix photo-detectors are processed in parallel using conventional image processing techniques, for comparing the imaged field of view with another field of view serving as a reference, in order to find differences in corresponding pixels, indicative of the presence of a wafer die defect.

Hereinafter, the term 'wafer' refers to, and is generally considered to feature individual patterned structures, known as 'semiconductor wafer dice', 'wafer dice', or wafer chips'. Current semiconductor technology involves the physical division of a single wafer into identical dies for the manufacture of integrated circuit chips, such that each die becomes an individual integrated circuit chip having a specific pattern, such as a memory chip or a microprocessor chip, for example. The type of chip produced from a given die is not relevant to the method or system of the present invention.

Hereinafter, the term ' field of view' refers to that part or segment of, a wafer, in general, and a wafer die, in particular, illuminated by a pulsed laser and imaged by the electro-optical camera system inspection optics in conjunction with the FPA. Accordingly, an entire single wafer die, and therefore, an entire single wafer featuring a plurality of wafer dies, is inspected by sequential imaging of a plurality or sequence of fields of view. The field of view can be considered as the inspection system electro-optical imaging footprint on the wafer or wafer die. Successive fields of view created while the wafer is moving in one direction are referred to as a 'strip' of fields of view. Pixels are referred to with respect to forming an image of a field of view by the electro-optical inspection system. As a reference dimension, general order of magnitude of the size of a typically square wafer die within a wafer is 1 centimeter by 1 centimeter, or 104 microns by 104 microns.

Hereinafter, detection of a 'wafer defect' refers to the detection of the presence of an irregularity or difference in the comparison of like patterns of wafer dies or like patterns of fields of view. Current methods and systems of defect detection on wafers are usually based on the analysis of comparing signals obtained from a number of adjacent wafer dies or fields of view, featuring a like pattern. Defects produced during wafer fabrication are assumed to be random in nature. Therefore, defect detection is based on a statistical approach, whereby the probability that a random defect will exist at the same location within adjacent wafer dies is very low. Hence, defect detection is commonly based on identifying irregularities through the use of the well known method of die-to-die comparison. A given inspection system is programmed to inspect the pattern of a wafer die or field of view, typically referred to as the inspected pattern, and then compares it to the identical pattern of a second wafer die or field of view on the same wafer, serving as the reference pattern, to detect any pattern irregularity or difference which would indicate the possible presence of a wafer defect.

A second comparison between the previously designated inspected pattern and the like pattern of a third wafer die or field of view is performed, in order to confirm the presence of a defect and to identify the wafer die or field of view containing the defect. In the second comparison, the first wafer die or field of view is considered a reference and the third wafer die or field of view is considered as inspected.

Fabrication of semiconductor wafers is highly complex and very expensive, and the miniature integrated circuit patterns of semiconductor wafers are highly sensitive to process induced defects, foreign material particulates, and equipment malfunctions. Costs related to the presence of wafer defects are multiplied several fold when going from development stages to mass production stages. Therefore, the semiconductor industry critically depends on a very fast ramp-up of wafer yield at the initial phase of production, and then achieving and controlling a continuous high yield during volume production.

Critical dimensions of integrated circuits on wafers are continuously decreasing, approaching 0.1 micron. Therefore, advanced semiconductor wafers are vulnerable to smaller sized defects than are currently detected. Current methods of monitoring wafer yield involve optically inspecting, in-process, wafers for defects and establishing a feedback loop, with appropriate parametric process control, between the fabrication process and the manufactured waters. To detect smaller sized defects, optical inspection systems need to have higher resolution via scanning wafers using smaller pixel sizes. Scanning a given sized wafer using pixel sizes smaller causes an increase in per wafer inspection time, resulting in decreased wafer throughput, and decreased statistical sample sizes of the number of inspected wafers. Conversely, attempting to increase wafer inspection throughput by using current optical system pixel sizes results in reducing the effectiveness, i.e., resolution, of detecting wafer defects.

In addition to decreasing critical dimensions of wafers, the semiconductor industry is in the process of converting from manufacturing 20cm (8-inch) wafers to 30cm (12-inch wafers). Larger, 80cm (12-inch) wafers have more than twice the surface area compared to 80cm (8-inch) wafers, and therefore, for a given inspection system, inspection time per 30cm (12-inch) wafer is expected to be twice as long as that per 8-inch wafer. Fabricating 30cm (12-inch) wafers is significantly more expensive than fabricating 20cm (8-inch) wafers. In particular, costs of raw materials of 30cm (12-inch) wafers are higher than those of 20cm (8-inch) wafers. One result of wafer size conversion, is that cost effective productivity of future wafer manufacturing will depend critically upon increasing speed and throughput of wafer inspection systems.

Automated wafer inspection systems are used for quality control and quality assurance of wafer fabrication processes, equipment, and products. Such systems are used for monitoring purposes and are not directly involved in the fabrication process. As for any principle component of an overall manufacturing system, it is important that a wafer inspection method, and system of implementation, be cost effective relative to the overall costs of manufacturing semiconductor wafers.

There is thus a need to inspect semiconductor wafers for wafer die defects, for wafers featuring larger sizes and smaller critical dimensions, at higher throughput than is currently available, and in a cost effective manner.

Automated optical wafer inspection systems were introduced in the 1980's when advances in electro-optics, computer platforms with associated software and image processing made possible the changeover from manual to automated wafer inspection. However, inspection speed, and consequently, wafer throughput of these systems became technology limited and didn't keep up with increasingly stringent production requirements, i.e., fabricating integrated circuit chips from wafers of increasing size and decreasing critical dimensions. Current wafer inspection systems typically use continuous illumination, and create a two dimensional image of a wafer segment, by scanning the wafer in two dimensions. This is a relatively slow process, and as a result, quantity of on-line inspection data acquired during a manufacturing process is small, generating a relatively small statistical sample of inspected wafers, translating to relatively long times required to detect wafer fabrication problems. Slow systems of on-line defect detection result in considerable wafer scrap, low wafer production yields, and overall long turn-around-times for pin-pointing fabrication processing steps and/or equipment causing wafer defects.

A notable limitation of current methods and systems of wafer defect detection relates to registration of pixel positions in wafer images. Before wafer defects can be detected by standard techniques of comparing differences in pixel intensities of an image of a targeted or inspected wafer die to pixel intensities of an image of a reference wafer die, the pixel positions of the images of the inspected and reference wafer die need to be registered. Due to typical mechanical inaccuracies during movement of a wafer held on a translation stage, velocity of a wafer beneath a wafer inspection camera system is not constant. As a result of this, image pixel positions in the fields of a detector are distorted and may not be as initially programmed. Therefore, a best fit two-dimensional translation pixel registration correction is performed.

Prior art methods and systems of wafer defect detection, featuring a combination of continuous wafer illumination and acquiring a two dimensional image by either scanning a wafer in two dimensions using a laser flying spot scanner as taught in US Patent No. 5,699,447, issued to Alumot et al., or scanning a wafer in one dimension using a linear array of photo detectors as taught in US Pat. No. 4,247,203, issued to Levy et al., require a registration correction for all pixels or all pixel lines. These methods limit system speed, i.e. inspection throughput, and require substantial electronic hardware. Moreover, they result in residual misregistration, since no correction procedure is accurate for all pixels in an image. Residual misregistration significantly reduces system defect detection sensitivity. For a wafer inspection method or system in which all focal plane assembly pixels in any given field can be considered one unit, generated simultaneously, there is no need for image pixel registration within a field of view of a focal plane assembly.

Therefore, only a single two dimensional alignment correction between the inspected field of view and the equivalent zone in a reference field of view is needed and a single alignment correction will be correct over the entire focal plane assembly field of view. Such a procedure results in negligible residual misregistration, enabling improved defect detection sensitivity. There is thus a need for a method or system of on-line electro-optical detection of wafer die defects which includes minimization of residual misregistration of image pixel positions.

An apparatus for wafer inspection is disclosed in U.S. Pat. Nos. 4,247,203, and 4,347,001, both issued to Levy at al. The apparatus described in those patents locates defects or faults in photomasks by simultaneously comparing patterns of adjacent dies on the photomask and locating differences. Using two different imaging channels, equivalent fields of view of each die are simultaneously imaged, and the images are electronically digitized by two linear diode array photo-detectors, each containing 512 pixels. A two dimensional image of a selected field of view of each die is generated by mechanically moving the object under inspection in one direction, and electronically scanning the array elements in the orthogonal direction. During the detector exposure time, the photomask can not be moved a distance of more than one pixel or the image becomes smeared. Therefore, the time to scan and inspect the photomask is very long. Since the photomask is moved continuously while the two dimensional images are generated, it is necessary that the photomask move without jitter and accelerations. This motion restriction requires a very massive and accurate air-bearing stage for holding and moving the photomask, which is costly.

In addition, the wafer inspection apparatus of Levy et al. is capable of detecting 2.5 micron defects with 95 % probability of detection on photomasks. For critical dimensions of current semiconductor integrated circuits approaching 0.1 micron, this means that the inspecting pixel must be of similar size magnitude. Since inspection speed increases inversely with squared pixel size, the apparatus of Levy et al. would slow down by more than two orders of magnitude. Furthermore, it becomes impractical to implement a motion stage capable of meeting the required mechanical accuracies.

Wafer inspection has also been implemented using a single imaging and detection channel, based on a solid state camera using a two dimensional CCD matrix photo- detector, such as described in 'Machine Vision and Applications', (1998) 1: 205-221, by IBM scientists Byron E. Dom et al.. A wafer inspection system designated as P300 is described for inspecting patterned wafers having a repetitive pattern of cells within each die, such as in semiconductor wafers for memory devices. The system captures an image field of view having 480 by 512 pixels. The image processing algorithms assume a known horizontal cell periodicity, R, in the image, and analyzes each pixel in the image by comparing it with two pixels, one pattern repetition period, R, away in either horizontal direction. Such a comparison of like cells within a single image is called a cell-to-cell comparison. The pixel under test is compared with periodic neighbors on both sides to resolve the ambiguity that would exist if it were compared with only a single pixel. While this system is capable of simultaneously capturing a two dimensional image of the object under test, it is very slow in inspecting an entire wafer.

Millions of image fields are needed to image an entire wafer, and since the system uses continuous illumination, such as is used with standard microscopes, the wafer must be moved, under the inspection camera, from field to field and stopped during the image exposure to avoid image smear. To reach another field, the mechanical motion stage carrying the wafer must accelerate, and than decelerate to a stop at a new position. Each such motion takes a relatively long time and therefore inspecting a wafer typically takes many hours.

There is thus a need for, and it would be useful to have, a fast on-line method and a system to inspect semiconductor wafers for wafer die defects, for wafers featuring larger sizes and smaller critical dimensions, at higher throughput than is currently available, while providing high levels of image resolution of wafer dies, in a cost effective manner.

US-A-2002/0037099 discloses an inspection system for inspecting objects comprising an imager operative to image multiple regions of said objects, while said objects are illuminated and are in motion, relative to the imager, along a travel path, said imager comprising a plurality of two-dimensional matrix arrays, a transporter for providing relative motion between the imager and said objects along said travel path, a pulsed laser object illuminator for illuminating said objects as they travel, relative to the imager, along said travel path, an image processing mechanism including an image comparator for comparing images of individual ones of said multiple regions.

The invention provides an inspection system as claimed in claim 1 and an inspection method as claimed in claim 6 below.

A preferred embodiment of the present invention relates to a method and system for fast on-line electro-optical detection of wafer die defects by illuminating with a short light pulse from a pulsed laser, a field of view of an electro-optical camera system having microscopy optics, and imaging a moving wafer, on to a focal plane assembly optically forming a surface of photo-detectors at the focal plane of an optical imaging system, formed from several, for example six detector ensembles, each detector ensemble including an array of several, for example, four, two-dimensional charge coupled device (CCD) matrix photo-detectors, whereby each two-dimensional CCD matrix photo-detector produces an electronic image containing a large matrix of, for example, two million, pixels, such that the simultaneously created images from the different CCD matrix detectors are processed in parallel using conventional image processing techniques, for comparing the imaged field of view with another field of view serving as a reference, in order to find differences in corresponding pixels, indicative of the presence of a wafer die defect.

In particular, the method and system of the present invention preferably enable capturing high pixel density, large field of view images of a wafer die, on-the-fly, without stopping movement of the wafer. High accuracy of wafer motion speed is not needed, and a relatively simple inexpensive mechanical stage for moving the wafer can be used. The continuously moving wafer is illuminated with a laser pulse of such short duration, for example, ten nanoseconds, significantly shorter than the image pixel dwell time, that there is effectively no image smear during the wafer motion. During the time interval of the laser pulse, a wafer die image moves less than a tenth of a pixel. The laser pulse has sufficient energy and brightness to impart the necessary illumination to the inspected field of view required for creating an image of the inspected wafer die. In addition, as a result of the method and system featuring optical coupling of the separate CCD matrix photo-detectors via the detector ensembles and the focal plane assembly, processing time of an entire array of for example twenty-four CCD matrix photo-detectors, having imaging capacity of 48 megapixels, is equivalent to processing time of a single CCD matrix photo-detector of the order of 1/30 of a second, since the processing of all the photo-detectors is processed in parallel. Consequently, parallel processing of the entire focal plane assembly including twenty-four CCD matrix photo-detectors provides an overall pixel processing data rate of nearly 1.5 gigapixels per second. Furthermore, the overall wafer inspection system operates essentially at 100 % efficiency, whereby, the laser pulse rate of 30 pulses per second is synchronized with the frame speed of 30 frames per second of each CCD matrix photo-detector, and the wafer is moved at a linear speed such that the distance between successive fields of view is covered in 1/30 of a second.

The method and system of the present invention preferably provide significant improvements over currently used methods and systems for electro-optical inspection and detection of wafer defects, in the semiconductor wafer fabrication industry, including providing high resolution large field of view wafer die images at very high wafer inspection throughput, and requiring less electronic and system hardware. Moreover, as a direct result of using an array of several CCD matrix photo-detectors for acquiring a high pixel density image of a wafer die illuminated by a single light pulse, the method and system of the present invention prevents misregistration of pixel positions in the wafer die images, enabling enhanced defect detection sensitivity. Such a method and system of wafer defect detection results in faster, more efficient, and cost effective, feedback control of wafer fabrication processes.

Thus, according a preferred embodiment of the present invention, there is provided a method for electro-optically inspecting a patterned semiconductor wafer of dies for a defect, the method comprising the steps of: (a) moving the patterned wafer along an inspection path; (b) providing a repetitively pulsed laser illuminating source; (c) sequentially illuminating each of a plurality of fields of view in each of a plurality of the wafer dies by using the pulsed laser illuminating source; (d) sequentially acquiring an image of the each of the plurality of the sequentially illuminated fields of view in each of a plurality of the wafer dies by using an electro-optical camera including at least two two-dimensional matrix photo-detectors, the at least two two-dimensional matrix photo-detectors simultaneously acquiring images of each of the plurality of the sequentially illuminated fields of view in each of a plurality of the wafer dies; and (e) detecting a wafer defect by comparing the sequentially acquired images of each of the plurality of the sequentially illuminated fields of view in each of a plurality of the wafer dies using a die-to-die comparison method.

According to still further features in the described preferred embodiments, the repetitively pulsed laser is a Q switched Nd:YAG laser or an Excimer laser.

According to still further features in the described preferred embodiments, the Q switched Nd:YAG laser is optically pumped by light emitting diodes.

According to still further features in the described preferred embodiments, the electro-optical camera further includes a non-linear optical crystal functioning as a second harmonic generating crystal, placed in a laser beam light path of the repetitively pulsed laser illumination source, the non-linear optical crystal halving wavelengths of the laser beam light generated by the repetitively pulsed laser. The electro-optical camera may also include an additional non-linear optical crystal in order to divide the original laser wavelength by 3, thereby to generate a third harmonic, or by 4, thereby to generate a fourth harmonic.

According to a preferred embodiment of the present invention, there is provided a system for electro-optically inspecting a patterned semiconductor wafer of dies for a defect, the system comprising: (a) a mechanism for providing movement of the patterned wafer along an inspection path; (b) a repetitively pulsed laser illumination source for illuminating the patterned wafer; (c) an electro-optical camera including at least two two-dimensional matrix photo-detectors for sequentially acquiring an image of each of a plurality of sequentially illuminated fields of view in each of a plurality of the wafer dies, the at least two two-dimensional matrix photo-detectors operate with a mechanism for simultaneous acquisition of images of each of the plurality of the sequentially illuminated fields of view in each of a plurality of the wafer dies; and (d) an image processing mechanism for processing the sequentially acquired images of each of the plurality of the illuminated fields of view in each of a plurality of the wafer dies and detecting a wafer defect by comparing the sequentially acquired images using a die-to-die comparison method.

According to a preferred embodiment of the present invention, there is provided an electro-optical camera for inspecting a patterned semiconductor wafer of dies for a defect, comprising a focal plane assembly including at least one detector ensemble, the detector ensemble includes an array of at least two two-dimensional matrix photo-detectors operating with a mechanism for simultaneous acquisition of images of each of a plurality of illuminated fields of view in each of a plurality of the wafer dies.

Implementation of the method and system of the present invention involves performing or completing tasks or steps manually, automatically, or a combination thereof. Moreover, according to actual instrumentation and equipment of a given wafer inspection system, several steps of the present invention could be implemented by hardware or by software on any operating system of any firmware or a combination thereof. For example, as hardware, indicated steps of the invention could be implemented as a chip or a circuit. As software, indicated steps of the invention could be implemented as a plurality of software instructions being executed by a computer using any suitable operating system. In any case, indicated steps of the method of the invention could be described as being performed by a data processor, such as a computing platform for executing a plurality of instructions.

### BRIEF DESCRIPTION OF THE DRAWINGS

The invention is herein described, by way of example only, with reference to the accompanying drawings, wherein:
FIG. 1 is a flow diagram of a preferred embodiment of the method for fast on-line electro-optical detection of wafer defects, in accordance with the present invention;
FIG. 2 is a schematic diagram illustrating an exemplary preferred embodiment of the system for fast on-line electro-optical detection of wafer defects, in accordance with the present invention;
FIG. 3A is a schematic diagram illustrating a top view of a CCD matrix photo-detector, in accordance with the present invention;
FIG. 3B is a schematic diagram illustrating a side view of a CCD matrix photo-detector, in accordance with the present invention;
FIG. 4A is a schematic diagram illustrating a close-up side view of a detector ensemble, including CCD matrix photo-detectors, and prisms, in accordance with the present invention;
FIG. 4B is a schematic diagram illustrating another close-up side view of a detector ensemble, including CCD matrix photo-detectors, and prisms, in accordance with the present invention;
FIG. 4C is a schematic diagram illustrating a close-up view of a surface of a glass prism, including zones of highly reflective coating, as part of the detector ensemble shown in FIGS. 4A - 4B, in accordance with the present invention;
FIG. 4D is a schematic diagram illustrating a close-up front optical view, of the detector ensemble shown in FIGS. 4A - 4C, showing the appearance of an optically continuous surface of photo-detectors, featuring a plurality of CCD matrix photo-detectors, in accordance with the present invention;
FIG. 5A is a schematic diagram illustrating a close-up view of the focal plane assembly, including beam splitting prisms and detector ensembles, in accordance with the present invention;
FIG. 5B is a schematic diagram illustrating an optically formed continuous surface of photo-detectors at the focal plane formed by the detector ensembles of the focal plane assembly and including several CCD matrix photo-detectors, in accordance with the present invention; and
FIG. 6 is a schematic diagram illustrating a close-up view of the image acquisition process featuring wafer dies, where each wafer die is sequentially inspected by imaging a plurality or strips of fields of view, one field of view at a time, in accordance with the present invention.

### DESCRIPTION OF THE PREFERRED EMBODIMENTS

The present invention preferably comprises a method and system for fast on-line electro-optical detection of wafer defects.

The method and system for fast on-line electro-optical detection of wafer defects introduces the unique combination of a new imaging system featuring an optically formed continuous surface of photo-detectors at the focal plane formed from an array of several two-dimensional matrix photo-detectors for acquiring a high resolution, high pixel density, large field of view image of a wafer die, synchronized with an illumination system featuring illumination of the wafer die by a short light pulse from a repetitively pulsed laser. The laser light pulse duration is significantly shorter than the image pixel dwell time, where the pixel dwell time refers to the time a point on the wafer is imaged by a detector pixel while the wafer is moving, and the laser light pulse rate is synchronized with the frame speed of the individual matrix photo-detectors.

Preferred steps of operation of the method, and components of the system of the present invention are better understood with reference to the drawings and the accompanying description. It is to be noted that illustrations of the present invention shown here are for illustrative purposes only and are not meant to be limiting.

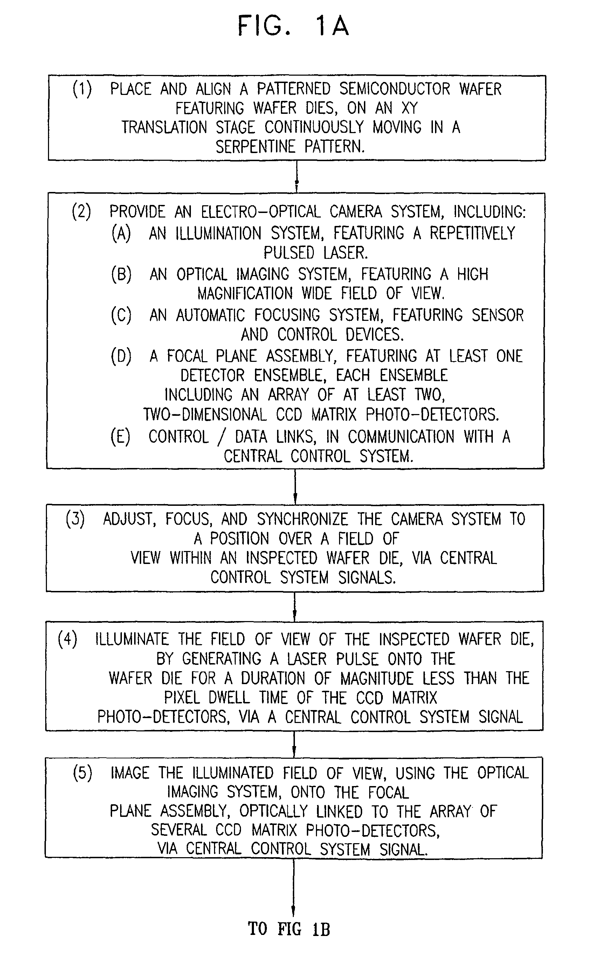

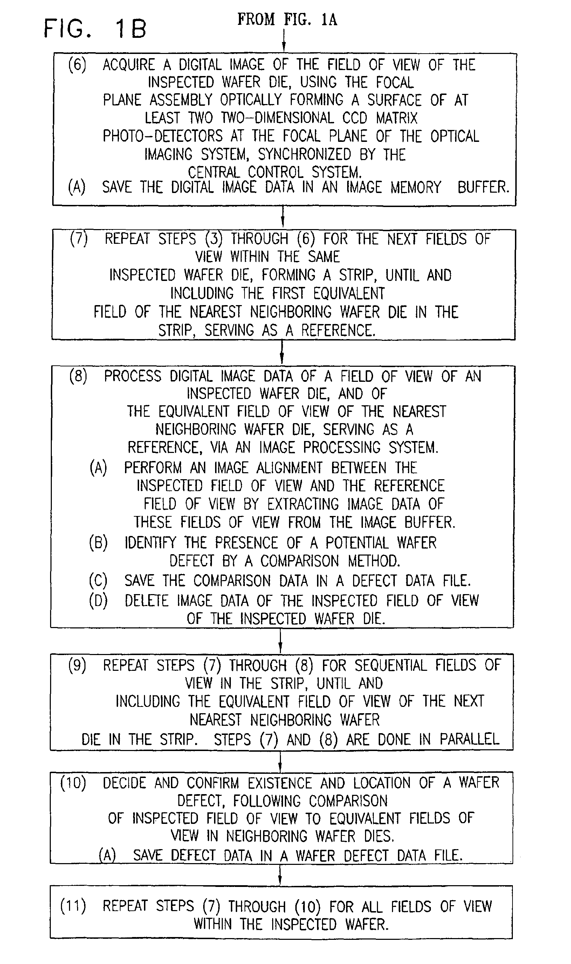

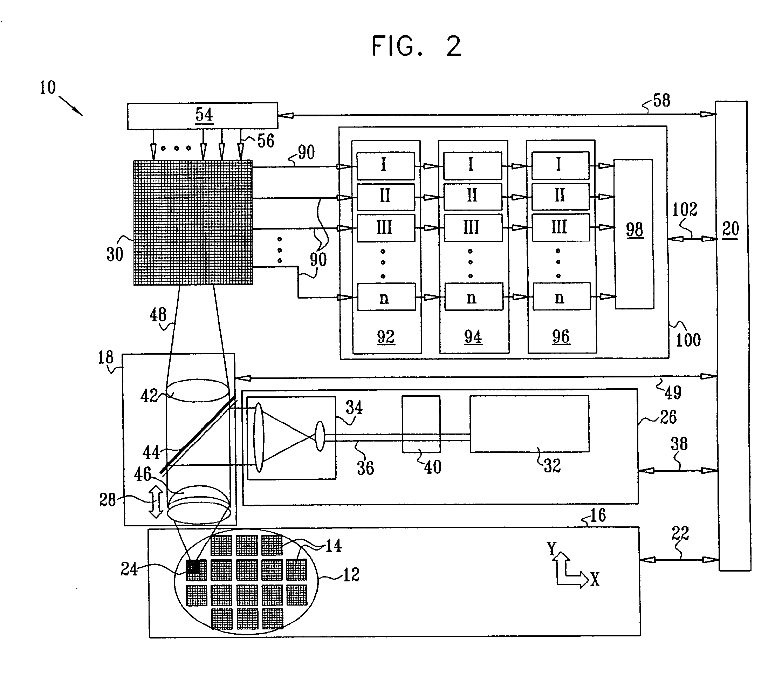

Referring now to the drawings, FIG. 1 is a flow diagram of a preferred embodiment of a method for fast electro-optical on-line detection of wafer defects. In FIG. 1, each generally applicable, principle step of the method is numbered and enclosed inside a frame. Sub-steps representing further of an indicated principle step of the method are indicated by a letter in parentheses. FIGS. 2 through 6 are schematic diagrams illustrating exemplary preferred embodiments of the system, and of system components, for implementing the method for fast on-line electro-optical detection of wafer defects. System components shown in FIGS. 2 through 6 corresponding to the method of FIG. 1 are referred to in the description of FIG. 1. Details and specific examples of system components of FIGS. 2 through 6 are provided throughout the following description. Terminology and references appearing in the following description of FIG. 1 are consistent with those shown in FIGS. 2 - 6.

In Step 1 of the method, a patterned semiconductor wafer 12 featuring a plurality of wafer dies 14, is placed and aligned on a continuous moving XY translation stage 16. This is shown in system 10 of FIG. 2, which is a schematic diagram illustrating an exemplary preferred embodiment of the system for fast on-line electro-optical detection of wafer defects. XY translation stage 16 moves wafer 12 in a serpentine pattern beneath an optical imaging system 18. Movement of XY translation stage 16, and therefore movement of wafer 12, are synchronized, by a central control system 20 via control / data links 22, with action of a multi-component camera system in a way that wafer 12 moves the equivalent of one field of view 24 during a CCD matrix photo-detector frame time of 33 milli-seconds and only a fraction, for example, on the order of about 10-2 of a single pixel during exposure to an illumination system 26, thereby resulting in no image smear or loss of image resolution.

In Step 2, a multi-component electro-optical camera system is provided, including (a) an illumination system 26, (b) an optical imaging system 18, (c) an automatic focusing system 7, (d) a focal plane assembly 30, and (e) respective system control / data links, in communication with central control system 20.

In sub-step (a) of Step 2, an illumination system 26 is provided, including a repetitively pulsed laser 32, a laser beam expander 34, a laser beam light path 36, and control / data links 38. This type of illumination system enables ultra fast imaging of a large field of view 24, by featuring pulsed laser 32 for repetitively generating and propagating a highly bright and highly energetic light pulse in an extremely short period of time.

This contributes to the overall method of wafer inspection having high throughput. Monochromatic laser illumination is also preferably used, in order to simplify design requirements of the wide field of view optical imaging system 18, since there are no chromatic aberrations requiring optical correction or adjustment. Illumination system 26 is in communication with the central control system 20 via control / data links 38.

In system 10, pulse rate, i.e., pulses per second, of pulsed laser 32 is synchronized with frame speed of the array of individual matrix photo-detectors of focal plane assembly 30. A laser pulse illuminating field of view 24 of a wafer die 14, for a time duration of nanoseconds compared to milliseconds frame time of temporally gated camera system focal plane assembly 30 of matrix photo-detectors, results in instantaneous illumination of field of view 24 of an inspected wafer die 14. In one very short laser pulse, a relatively large number of pixels, for example, about forty eight million pixels, of focal plane assembly array 30 of several, for example, twenty four, matrix photo-detectors, is simultaneously illuminated, and there is essentially no relative movement among the pixels. The laser light pulse duration is significantly shorter than the image pixel dwell time, where the pixel dwell time refers to the time a point on the wafer is imaged by a detector pixel while the wafer is moving.

Preferably, repetitively pulsed laser 32 is a Q switched Nd:YAG laser, optically pumped by light emitting diodes, at a pulse rate of 30 pulses per second, with a pulse time interval of about 10 nanoseconds, generating a pulsed monochromatic light beam at a wavelength of 1.06 microns. The pulse rate of pulsed laser illumination system 26 of 30 pulses per second, is synchronized with a frame speed of 30 frames per second, of the array of CCD matrix photo-detectors on focal plane assembly 30. Laser 32 may also be an Excimer laser.

Optical resolution is a linear function of the illuminating wavelength. Resolution of an optical system increases as illumination wavelength decreases. Therefore, to increase resolution of optical system 18 and consequently defect detection sensitivity of inspection system 10, one or more crystals 40 having non linear optical properties and generating at least a 'second harmonic' may be placed in laser beam light path 36 of illumination system 26. The second, third or fourth harmonic generated by the crystal or crystals 40 provides illumination with a 0.53 micron, 0.355 micron or 0.265 micron wavelength, respectively, thereby doubling, tripling or quadrupling, respectively, the resolution of the wafer inspection system 10.

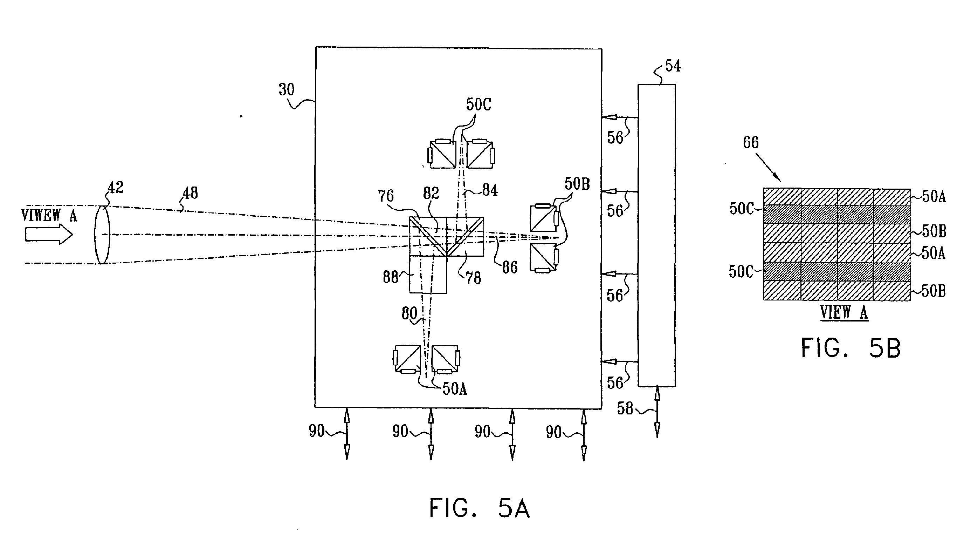

In sub-step (b) of Step 2, an optical imaging system 18, is provided, including a focusing lens 42, a beam splitter 44, an objective lens 46, and control / data links 49. This system is suitable for ultra fast high resolution synchronous imaging of high magnification, for example, 50X, of wide field of view 24 of a wafer die 14. An automatic focusing system 28 automatically adjusts and sets the position of objective lens 46 of optical imaging system 18 for optimum focus of all wafer dies 14 on wafer 12. Optical imaging system 18 is in communication with the central control system 20 via control / data links 49. During operation of wafer inspection system 10, focusing lens 42 images laser light 48, where laser light 48 represents light reflected, scattered and diffracted by wafer 12, onto focal plane assembly 30. This imaging process is further described with reference to FIG. 5A below.

In sub-step (c) of Step 2, an automatic focusing system 28, including sensor and control devices (not shown) is provided, which, via optical imaging system 18, automatically maintains wafer 12, and therefore, a wafer die 14, in focus.

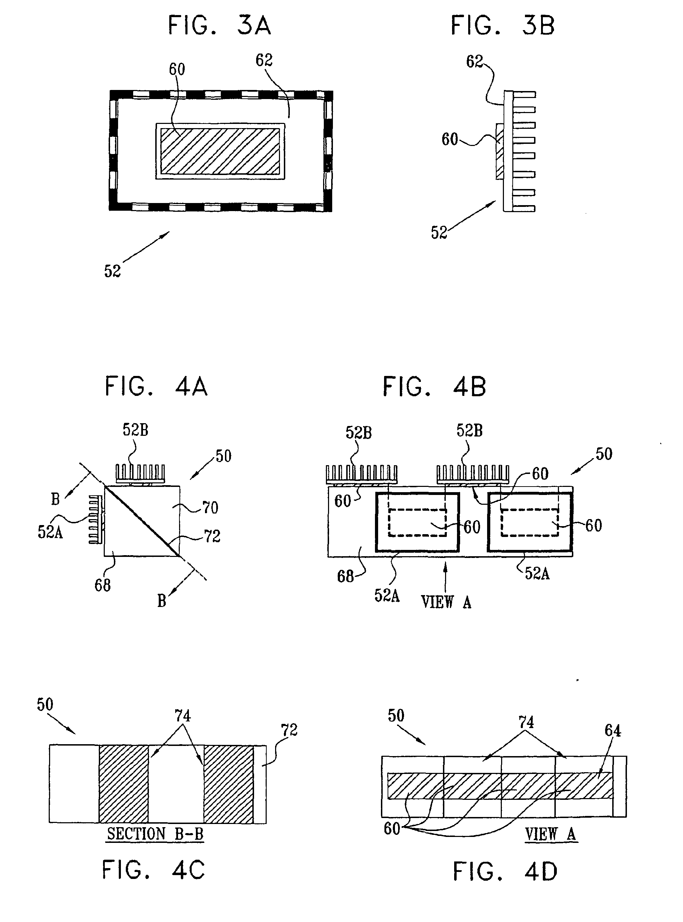

In sub-step (d) of Step 2, a focal plane assembly 30 is provided, including a number of detector ensembles 50 (FIGS. 4 - 5), where each detector ensemble 50 features several individual two-dimensional matrix photo-detectors, preferably but not limited to, at least two two-dimensional CCD matrix photo-detectors 52 (FIGS. 3A - 3B), focal plane assembly electronics 54, and control / data links 56, 58, and 90, enabling high capacity and ultra fast high resolution synchronous imaging of a wafer die 14. Preferred structural and configurational components and features of focal plane assembly 30 are provided in FIGS. 3A and 3B, FIGS. 4A through 4D, and FIGS. 5A and 5B, which are schematic diagrams illustrating close-up views of an individual CCD matrix photo-detector 52, a detector ensemble 50 and focal plane assembly 30, respectively.

In FIGS. 3A - 3B, of schematic diagrams illustrating top and side views of a two-dimensional CCD matrix photo-detector 52, respectively, photo-sensitive area 60 is surrounded by a photo-insensitive area 62, a configuration which prevents the physical placement of two CCD matrix photo-detectors side-by-side, thus creating continuous, photo-sensitive focal plane. Focal plane assembly 30 (FIGS. 2 and 5A) includes several, for example, six, detector ensembles 50 (FIGS. 4A and 4B), where each detector ensemble 50 includes several, for example, four, two-dimensional CCD matrix photo-detectors 52, for a total of, for example, twenty four, commercially available high resolution, black and white, silicon two-dimensional CCD matrix photo-detectors 52, wherein each CCD matrix photo-detector 52 has a very high number of, for example, 1940 x 1035 (i.e., on the order of two million or 2 mega) image sensing picture elements, or pixels, capable of providing 30 frames per second at high definition standards.

Focal plane assembly 30, featuring six detector assemblies 50, each detector ensemble featuring an array 64 (FIG. 4D) of four individual CCD matrix photo-detectors 52, optically couples all twenty-four individual CCD matrix photo-detectors 52 to optically form a, continuous, surface of photo-detectors 66 at the focal plane (FIG. 5B), filling the relatively large field of view 24 of the 50X magnification microscopy optical imaging system 18. This optical configuration enables illumination of a wafer die 14 with a single laser pulse and simultaneous imaging by an array 66, of twenty-four two-dimensional CCD matrix photo-detectors, having a total of about 48 million (48 mega) pixels. For a CCD matrix photo-detector frame speed of 30 frames per second, and an array of about 48 megapixels, image acquisition of wafer die 14 is at a rate of about 1.5 billion (1.5 giga) pixels per second. Such an image acquisition rate translates to very high system throughput. Focal plane assembly 30 is in communication with central control system 20 via control / data links 56 and 58 (FIG. 2).

FIGS. 4A and 4B are schematic diagrams illustrating close-up side views of detector ensemble 50, showing geometric configuration of two sets of, for example, two CCD matrix photo-detectors each 52A and 52B. Preferably, each detector ensemble 50 is constructed from two glass prisms 68 and 70, each prism having a right angle and a 45 degrees diagonal surface. Diagonal surface 72 of prism 68 has zones on which a highly reflective coating, preferably approaching 100%, are applied. On each prism 68 and 70 at least one CCD matrix photo detector is optically bonded. Exemplary set of two CCD matrix photo-detectors 52A bonded on prism 68 is identical to exemplary set of two CCD matrix photo-detectors 52B bonded on prism 70. In FIG. 4B, the set of two CCD matrix photo-detectors 52A are shown bonded in straight file on prism 68, and the set of two CCD matrix photo-detectors 52B are bonded in straight file on prism 70, and the exact position of the bonded CCD matrix photo-detectors is selected such that all photo-sensitive areas 60 of individual CCD matrix photo-detectors 52A and 52B optically appear as one continuous straight strip when viewed from View A.

FIG. 4C is a schematic diagram illustrating a close-up view of diagonal surface 72, of glass prism 68, including zones of highly reflective coating. FIG. 4C shows a view of Section B-B of FIG. 4A, wherein zones 74, on diagonal surface 72, are coated with highly reflective coating, and are arranged on surface 72 to be opposite photo-sensitive areas 60 of CCD matrix photo detectors 52A bonded on prism 68. Light entering detector ensemble 50 along View A, opposite reflective zones 74, are reflected by reflective zones 74 and deviated by 90 degrees to impinge upon CCD matrix photo-detectors 52A. Light entering detector ensemble 50 along View A, not opposite reflective zones 74 pass through prisms 68 and 70 undeviated and impinge upon CCD matrix photo-detectors 52B.

FIG. 4D is a schematic diagram illustrating a close-up front optical view, of detector ensemble 50 shown in FIGS. 4A - 4C, showing the appearance of an optically continuous surface of photo-detectors, featuring the plurality of CCD matrix photo detectors 52. FIG 4D shows View A of FIG. 4B and demonstrates the creation by optical means of continuous surface 64, featuring four photo-sensitive photo-detector areas 60. Within surface 64, those photo-sensitive areas 60 opposite reflecting zones 74 are associated with CCD matrix photo-detectors 52A bonded onto prism 68. The other photo-sensitive areas 60 not opposite reflecting zones 74 are associated with CCD matrix photo-detectors 52B, bonded onto prism 70. Photo-detectors 52A and 52B are in different surfaces or planes and photosensitive areas 60 are not continuous, but detector ensemble 50 creates surface 64 by optical means.

FIG. 5A is a schematic diagram illustrating a close-up view of focal plane assembly 30, including beam splitting prisms 76 and 78, and detector ensembles 50. In FIG. 5A, focal plane assembly 30 includes six detector ensembles 50, two labeled 50A, two labeled 50B, and two labeled 50C. Light 48, representing reflected, scattered, and diffracted laser illumination light coming off of wafer 12, is directed and focused into focal plane assembly 30 by focusing lens 42. Light 48 passes through beam splitting glass cube 76 which reflects, at 90 degrees, approximately 33% of light 48, forming imaging channel 80, and transmits about 67% of light 48. Transmitted light 82 emerging from beam splitting cube 76, goes through a second beam splitting cube 78 which reflects, at 90 degrees, approximately 50% of light 82, forming imaging channel 84, and transmits about 50% of light 82, forming imaging channel 86.

This configuration of the combination of beam splitting cubes 76 and 78 creates three imaging channels 80, 86 and 84, each with equal light energy, and each with approximately 33% of the light energy of original input light beam 48. Optical cube 88 is inserted in imaging channel 80 so as to equalize the amount of glass in the optical paths of all three imaging channels, thus enabling similar image quality formed in all three channels. At the focus point of focusing lens 42, for each of the three imaging channels 80, 86, and 84, two sets of detector ensembles 50 are placed. One set of two detector ensembles 50A is placed in imaging channel 80, one set of two detector ensembles 50B is placed in imaging channel 86, and one set of two detector ensembles 50C is placed in imaging channel 84.

FIG. 5B is a schematic diagram illustrating front optical View A of focal plane assembly 30 demonstrating optical formation of continuous surface 66 of photo-detectors at the focal plane, by using six detector ensembles 50 and twenty-four two-dimensional CCD matrix photo-detectors 52 located in different geometrical surfaces.

In (e) of Step 2, referring again to FIG. 2, control / data links, including 38, 49, 54, 56, and 58, and central control system 20, feature electronic interconnections among the different systems and system components, enabling proper automation and synchronization of the various steps of the method of detection of wafer defects. For example, automatic movement of wafer 12 via movement of XY translation stage 16 is electronically set at a linear speed such that wafer 12 moves a distance of one field of view 24 between the time of two pulses emitted by pulsed laser 32 in illumination system 26. Temporally gated opening and closing, or frame speed, of focal plane assembly 30, including all CCD matrix photo-detectors 52 is synchronized with the pulse rate of pulsed laser 32 in illumination system 26.

In Step 3, the camera system of Step 2 is adjusted, focused, and set to a position over an inspected field of view 24 within a wafer die 14, via central control system 20 signals. Pulse rate of pulsed laser 32 in illumination system 26 is synchronized with the frame speed of CCD matrix photo-detectors 52 included in detector ensembles 50A, 50B, and 50C of focal plane assembly 30. This step is performed in order to enable movement of wafer 12, and therefore, of an inspected wafer die 14, at a speed such that an inspected field of view 24 is covered during the time interval of one frame of CCD matrix photo-detectors 52 of focal plane assembly 30.

In Step 4, instantaneous illumination of an inspected field of view 24 of an inspected wafer die 14 of Step 3 is achieved by generating a laser pulse onto inspected wafer die 14, for a time duration, for example, ten nanoseconds, orders of magnitude less than synchronized pulse rate and frame time of camera system CCD matrix photo-detectors 52, via a central control system 20 signal. In a ten nanosecond laser pulse, about 48 million pixels, of focal plane assembly 30 featuring twenty-four CCD matrix photo-detectors 52, is simultaneously illuminated, and there is no relative movement among the pixels. During the short laser pulse, there is effectively no wafer motion during the wafer exposure time, since the laser pulse duration is much shorter than the pixel dwell time, which is the time a point on the wafer is imaged by a detector pixel while the wafer moves, and therefore, there is effectively no image smear degrading image resolution, as is typically the case in wafer inspection methods and systems featuring continuous illumination of a wafer.

In Step 5, illuminated inspected field of view 24 of Step 4 is imaged by optical imaging system 18 onto focal plane assembly 30, optically linked to detector ensembles 50A, 50B, and 50C, featuring the twenty-four, two dimensional CCD matrix photo-detectors 52, via central control system 20 signal.

In Step 6, the digital image (not shown) of Step 5, featuring about 58 million pixels, of an inspected field of view 24 of a wafer die 14 is acquired by using focal plane assembly 30 optically forming a continuous surface of at least two two-dimensional CCD matrix photo-detectors 52, by synchronized opening of temporally gated CCD matrix photo-detectors 52, via a central control system 20 signal. During the frame time interval of each activated CCD matrix photo-detector 52, wafer 12, and therefore, wafer die 14, moves via XY translation stage 16 the equivalent of one field of view. This corresponds to a large pixel dwell time relative to laser pulse time interval, resulting in the wafer moving only a fraction, for example, on the order of 10-2, of a single pixel during exposure to array 66 (FIG. 5B) of CCD matrix photo-detectors 52 of focal plane assembly 30, thereby preventing image smear or loss of image resolution. In sub-step (a), acquired digital image data is grabbed via a set of parallel configured image processing channels 90 by an image grabber 92, and is saved in an image memory buffer 94, part of image processing system 100 (FIG. 2).

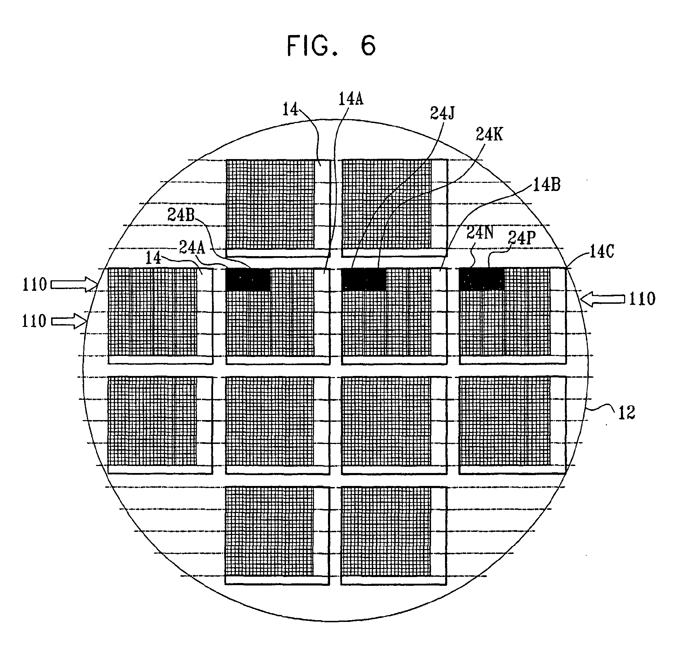

In Step 7, Step 3 through Step 6 are sequentially repeated for image acquisition of the next fields of view within the same inspected wafer die 14, thereby forming a strip of fields of views until and including the first equivalent field of view of the nearest neighboring wafer die in the strip, serving as a reference. This automated sequential imaging process is clearly illustrated in FIG. 6, which is a schematic diagram illustrating a close-up view of the image acquisition process featuring wafer dies, where each wafer die is sequentially inspected by imaging a plurality or strips of fields of view, one field of view at a time. In FIG. 6, following image acquisition of first field of view 24A in first inspected wafer die 6A, there is image acquisition of second field of view 24B in same first inspected wafer die 14A. Synchronized with serpentine motion of wafer 12, image acquisition of successive fields of view, one after another, progresses throughout entire first inspected wafer die 14A, and continues until an image is acquired for first field of view 24J in second inspected wafer die 14B. This process results in the formation of continuous strips 110 of imaged wafer dies 14, until eventually entire wafer 12 is completely imaged.

In Step 8, digital image data of each field of view in an inspected wafer die and, of each equivalently located field of view in the nearest neighboring wafer die, serving as a reference, are processed, by using an image processing system. Referring to FIG. 2, image processing system 100 includes parallel configured image processing channels 90 for image grabbing by an image grabber 92, an image buffer 94, a defect detection unit 96, a defect file 98, and control / data links 102. Image data acquired by focal plane assembly 30 featuring twenty-four two-dimensional CCD matrix photo-detectors 52 is processed in parallel, whereby each of the twenty-four CCD matrix photo-detectors 52 communicates separately, in parallel to the other CCD matrix photo-detectors 52 of focal plane assembly 30, with image grabber 92, via twenty-four separate image processing channels 90. Instead of processing image data using a single serial channel of 48 megapixels at a CCD frame speed acquisition rate of 30 times per second, resulting in a single channel with a very high, 1.5 gigapixels per second processing rate, each of the twenty-four separate image processing channels 90 having about 2 megapixels of image data, acquired at a rate of 30 times per second, is used for processing at a moderate rate of 60 megapixels per second. In this configuration, an overall image processing rate of 1.5 gigapixels per second is achieved using significantly slower individual channels, which are easier to implement in wafer defect detection system 10 using commercially available hardware. This feature of parallel processing of acquired image data contributes significantly to the resulting high throughput of the method of wafer inspection of the present invention. Image processing system 100 is in communication with central control system 20 via control / data links 102.

Step 8 includes sub-step (a) performing an image alignment between the inspected field of view and the reference field of view, sub-step (b) identifying the presence of a potential wafer defect, sub-step (c) saving the comparison data in a defect file, and sub-step (d) deleting unneeded image data of the first field of view of the first inspected wafer die.

In sub-step (a) of Step 8, an image alignment is performed between the image of each inspected field of view and the corresponding field of view serving as a reference, prior to identifying the presence of a potential wafer defect in the inspected wafer die. Due to minor mechanical inaccuracies during movement of XY translation stage 16, velocity of a wafer 12 beneath camera optical imaging system 18 is not constant. As a result of this, image pixel positions in the multiple fields of the CCD matrix detectors may not be as initially programmed according to inter-system synchronization. Therefore, a two-dimensional translational image alignment correction between an inspected field of view and a reference field of view is performed. More complex rotation registration correction may also be performed, but for standard implementation of the method and system of the present invention, it is neglected. This process of aligning images of fields of views, prior to defect detection by image comparison is illustrated in FIG. 6 for exemplary strips 110 of equivalent fields of view. Pixel positions in the image of first field of view 24A of first inspected wafer die 14A and pixel positions in the image of equivalently located first field of view 24J of nearest neighboring wafer die 14B are extracted from image buffer 94, and are subjected to an image alignment correction. In this process, first field of view 24J of nearest neighboring wafer die 14B serves as the reference to equivalent field of view 24A of first inspected wafer die 14A.

Prior art methods and systems of wafer defect detection, such as those described above, featuring a combination of continuous wafer illumination and acquiring a two dimensional image by either scanning a wafer in one or two dimensions, require a registration correction for all pixels or all pixel lines. This limits overall system speed, i.e., throughput, and increases requirements of electronic hardware and overall system costs. Moreover, this results in residual misregistration, since no correction procedure is accurate for all pixels in an image. Residual misregistration significantly reduces system defect detection sensitivity. In contrast, for the preferred embodiments of the method and system of the present invention, all focal plane assembly CCD matrix detector pixels in any given field of view of the focal plane assembly are considered one unit, and are generated simultaneously by a single laser pulse. Therefore, there is no need for pixel registration within a focal plane assembly field of view, and a simple alignment correction between any small localized zone within the inspected field of view and the equivalent zone in a reference field of view is correct over the entire focal plane assembly field of views. Therefore, in the present invention, residual misregistration is negligible, enabling improved defect detection sensitivity.

In sub-step (b) of Step 8, following image alignment correction, there is identification of the presence of a potential wafer defect in the inspected wafer die, by comparing differences of pixel intensities of the image of each, starting from the first, field of view of the inspected wafer die to pixel intensities of the image of each equivalently located, starting from the first, field of view of the nearest neighboring wafer die. In this defect identification step, a standard algorithm of defect detection is used, which is based on the analysis of comparing pixel intensities of images acquired from identical fields of view of adjacent neighboring wafer dies, featuring a like pattern. Defect detection is based on a statistical approach, whereby the probability that a defect will exist at the equivalent location within adjacent wafer dies is very low. An exemplary standard algorithm for locating irregularities among pixel intensities of different images is based on a three-die comparison. The overall wafer inspection system is programmed to inspect the pattern, pixel-by-pixel, of a wafer die or field of view, typically referred to as the inspected pattern, and then compares it to the supposedly equivalent pattern of the adjacent neighboring wafer die on the same wafer, which serves as a reference. A defect detector detects any pattern irregularity or difference which would indicate the possible presence of a wafer defect in the current inspected wafer die. The pattern under test is also compared with the equivalently located pattern of another adjacent wafer die in order to resolve ambiguity that may exist if the test pattern was compared with only a single pattern. In the second comparison, in order to maintain symmetry, the pattern under test serves as the reference.

This image comparison process, performed by defect detection unit 96 (FIG. 2) is illustrated in FIG. 6. Each pixel intensity in the image of first field of view 24A of first inspected wafer die 14A is compared to the pixel intensity in the image of equivalently located first field of view 24J of adjacent neighboring wafer die 14B.

In sub-step (c), according to pre-determined comparison criteria, such as a specified difference or irregularity threshold level, a difference or irregularity in intensity of the two corresponding pixels in equivalently located first fields of view 24A, and 24J, of wafer dies 14A, and 14B acting as a reference, respectively, is saved in wafer defect file 98, in order to be further processed by a decision step confirming or dismissing defect existence and location (Step 10).

In sub-step (d), unneeded image data of first field of view 24A of first inspected wafer die 14A is deleted from image buffer 94. As data of the comparison of equivalently located first fields of view 24A and 24J of first inspected and second inspected wafer dies 14A and 14B respectively, is saved, image data of first field of view 24A of first inspected wafer die 14A is no longer needed for image processing of successive wafer dies 14 in wafer 12.

In Step 9, Step 7 and Step 8 are repeated for sequential fields of view in second inspected wafer die 14B, until and including processing the image of first field of view 24N of third inspected wafer die 14C. Steps 7 and 8 are carried out in parallel. While image acquisition in Step 7 is carried out for each field of view in a strip 110, image processing and comparison of each preceding field of view in a strip 110 is carried out according to Step 8.

Step 10 is a decision and confirmation step, performed by defect detector unit 96, deciding and confirming whether or not there is detection of a wafer defect in each field of view, starting with field of view 24J of wafer die 14B, initially processed according to Step 8. Presence of irregularity or difference between equivalently located first fields of view 24A and 24J of first and second wafer dies 14A and 14B respectively, is followed by the next comparison between equivalently located first fields of view 24J and 24N of second and third wafer dies 14B and 14C, respectively, in order to confirm or dismiss the presence of a defect located in field of view 24J of wafer die 14B.

In sub-step (a) of Step 10, confirmed wafer defect information, including location of the confirmed wafer defect, is appropriately saved in defect file 98 for possible use in feedback control of a wafer fabrication process.

In Step 11, Step 7 through Step 10 are repeated, sequentially, for inspection of each field of view in a field of view strip 110 within the same wafer. In FIG. 6, for example, wafer field of view 24K in wafer die 14B becomes the next inspected field of view to be subjected to image processing by Step 7 through Step 10. Starting with field of view 24K in wafer die 14B, images of successive fields of view in second wafer die 14B are to be compared to equivalently located images of fields of view in wafer dies 14A and 14C. Field of view 24K in wafer die 14B is compared to equivalently located field of view 24B in wafer die 14A, with field of view 24B serving as the reference, and field of view 24K in wafer die 14B is compared to field of view 24P in wafer die 14C, with field of view 24K serving as a reference. In this case, each image of each successive set of fields of view in a strip 110 is compared once to an equivalent field of view on a wafer die proceeding it in the strip and once compared to an equivalent field of view on a wafer die succeeding it in the strip. Each compared field of view serves once as a reference field of view in the comparison and once as an inspected field of view in the comparison. Synchronized with serpentine motion of wafer 12, selection, illumination, imaging, acquisition, and processing, of an image of successive fields of view of successive wafer dies, one after another, progresses from wafer die to wafer die throughout entire wafer 12, until all wafer dies 14 of wafer 12 are inspected for defects.

In accordance with a preferred embodiment of the present invention which is defined in claims 1 and 6, an inspection system for inspecting objects including multiple identical regions is provided, including an imager operative to image the multiple identical regions of the objects, while the objects are illuminated and are in motion along a travel path, a transporter for providing relative motion between the imager and the objects along the travel path, a pulsed laser object illuminator for illuminating the objects as they travel along the travel path and an imaging comparator for comparing images of individual ones of the multiple identical regions.

The inspection system including the features defined in claim 1 may include the following features:
a. Preferably, the transporter includes an object transporter operative to displace the objects along the travel path.
b. Typically, the transporter includes a continuous motion provider operative to provide continuous relative motion between the imager and the objects along the travel path.
c. The illuminator may include a repetitively pulsed laser illuminating source, illuminating at least one field of view in each of a plurality of wafer dies. The imager may include a camera, acquiring images of the at least one field of view in each of the plurality of wafer dies.
d. The imaging comparator may include a wafer defect detector, detecting a wafer defect by comparing the images using a die-to-die comparison method.
e. The repetitively pulsed laser illuminating source includes a Q switched Nd:YAG laser which is preferably optically pumped by light emitting diodes.
f. A plurality of fields of view may be sequentially illuminated in at least one of the plurality of wafer dies and wherein the camera includes an electro-optical camera including at least two two-dimensional matrix photo-detectors simultaneously acquiring images of each of the plurality of sequentially illuminated fields of view in each of the plurality of the wafer dies.
g. The electro-optical camera may further include a focal plane assembly including at least one detector ensemble including an array of the at least two two-dimensional matrix photo-detectors, each of which includes a high resolution, black and white two-dimensional matrix photo-detector.
h. Each of the at least two two-dimensional matrix photo-detectors may include a two-dimensional CCD matrix photo-detector.
i. The focal plane assembly optically forms a continuous surface of the photo-detectors at a focal plane within the electro-optical camera.
j. The electro-optical camera further includes a non-linear optical crystal functioning as a second harmonic generating crystal, placed in a laser beam light path of the repetitively pulsed laser illuminating source, the non-linear optical crystal halving wavelengths of laser beam light generated by the repetitively pulsed laser.
k. The at least one field of view may include a plurality of illuminated fields of view.

In accordance with another preferred embodiment of the present invention which is defined in claims 1 and 6, an inspection system for inspecting objects including multiple identical regions is provided, including an imager operative to image the multiple identical regions of the objects, while the objects are illuminated and are in motion along a travel path, the imager employing at least one two-dimensional detector array, a transporter for providing relative motion between the imager and the objects along the travel path, an object illuminator for illuminating the objects as they travel along the travel path, and an imaging comparator for comparing images of individual ones of the multiple identical regions.

The inspection system including the features defined in claim 1 may include the following features:
a. The imager employs a plurality of two-dimensional detector arrays which are arranged to be optically contiguous.
b. The object illuminator is a pulsed laser illuminator.
c. The transporter includes an object transporter operative to displace the objects along the travel path.
d. The transporter may include a continuous motion provider operative to provide continuous relative motion between the imager and the objects along the travel path.
e. The illuminator may include a repetitively pulsed laser illuminating source, illuminating at least one field of view in each of a plurality of wafer dies.
f. The imager may include a camera, acquiring images of the at least one field of view in each of the plurality of wafer dies.
g. The imaging comparator may include a wafer defect detector, detecting a wafer defect by comparing the images using a die-to-die comparison method.
h. The repetitively pulsed laser illuminating source may include a Q switched Nd:YAG laser which is preferably optically pumped by light emitting diodes.
i. The camera may include an electro-optical camera including at least two two-dimensional matrix photo-detectors simultaneously acquiring images of each of a plurality of sequentially illuminated fields of view in each of a plurality of the wafer dies.
j. The electro- optical camera may further include a focal plane assembly including at least one detector ensemble including an array of the at least two two-dimensional matrix photo-detectors, each of which may include a high resolution, black and white two-dimensional matrix photo-detector.
k. Each of the at least two two-dimensional matrix photo-detectors may include a two-dimensional CCD matrix photo-detector.
l. The focal plane assembly optically forms a continuous surface of the photo-detectors at a focal plane within the electro-optical camera.
m. The electro-optical camera may further include a non-linear optical crystal functioning as a second harmonic generating crystal, placed in a laser beam light path of the repetitively pulsed laser illuminating source, the non-linear optical crystal halving wavelengths of laser beam light generated by the repetitively pulsed laser.
n. The at least one field of view may include a plurality of illuminated fields of view.

In accordance with still another preferred embodiment of the present invention which is defined in claims 1 and 6, an inspection system for inspecting objects including multiple identical regions is provided, the system including an imager operative to image the multiple identical regions of the objects, while the objects are illuminated and are in motion along a travel path, a transporter for providing relative motion between the imager and the objects along the travel path, a laser object illuminator for illuminating the objects as they travel along the travel path, and an imaging comparator for comparing images of individual ones of the multiple identical regions. This system including the features defined in claim 1 may include the following features:
a. The illuminator may include a repetitively pulsed laser illuminating source, illuminating at least one field of view in each of a plurality of wafer dies;
b. The imager may include a camera, acquiring images of the at least one field of view in each of the plurality of wafer dies.
c. The imaging comparator may include a wafer defect detector, detecting a wafer defect by comparing the images using a die-to-die comparison method.
d. The repetitively pulsed laser illuminating source may include a Q switched Nd:YAG laser which is preferably optically pumped by light emitting diodes.
e. The camera may include an electro-optical camera including at least two two-dimensional matrix photo-detectors simultaneously acquiring images of each of the plurality of fields of view in each of a plurality of the wafer dies.
f. The electro- optical camera may further include a focal plane assembly including at least one detector ensemble including an array of the at least two two-dimensional matrix photo-detectors, each of which includes a high resolution, black and white two-dimensional matrix photo-detector.
g. Each of the at least two two-dimensional matrix photo-detectors includes a two-dimensional CCD matrix photo-detector.
h. The focal plane assembly optically forms a continous surface of the photo-detectors at a focal plane within the electro-optical camera.
i. The electro-optical camera may further include a non-linear optical crystal functioning as a second harmonic generating crystal, placed in a laser beam light path of the repetitively pulsed laser illuminating source, the non-linear optical crystal halving wavelengths of laser beam light generated by the repetitively pulsed laser.
j. The at least one field of view includes a plurality of illuminated fields of view.

In accordance with still another preferred embodiment of the present invention which is defined in claims 1 and 6, an inspection method for inspecting objects including multiple identical regions is provided, the method including using an imager for imaging the multiple identical regions of the objects, while the objects are illuminated and are in motion along a travel path, providing relative motion between the imager and the objects along the travel path, illuminating the objects as they travel along the travel path; and comparing images of individual ones of the multiple identical regions. The providing step includes displacing the objects along the travel path. The providing step may include providing continuous relative motion between the imager and the objects along the travel path.

The inspection method including the steps and features defined in claim 6 may include the following features:
a. This method may also include providing objects including at least one patterned semiconductor wafer of dies to be inspected for defects, wherein the illuminating includes providing a repetitively pulsed laser illuminating source and illuminating at least one field of view in each of a plurality of wafer dies using the pulsed laser illuminating source, wherein the imaging includes acquiring images of the at least one field of view in each of the plurality of wafer dies, and wherein the comparing includes detecting a wafer defect by comparing the images using a die-to-die comparison method.
b. The detecting step includes parallel processing of multiple portions of the images.
c. The at least one field of view includes multiple fields of view, and the multiple portions of the images correspond to the multiple fields of view.
d. The method also includes moving the at least one patterned wafer along an inspection path.
e. Illuminating of at least one field of view may include sequentially illuminating at least one field of view in each of the plurality of wafer dies using the pulsed laser illuminating source. The illuminating step may include illuminating, preferably sequentially, each of a plurality of fields of view in each of the plurality of wafer dies using the pulsed laser illuminating source.
f. Acquiring may include sequentially acquiring images of the at least one field of view in each of the plurality of wafer dies. Acquiring may be performed using an electro-optical camera including at least two two-dimensional matrix photo-detectors simultaneously acquiring images of each of the plurality of fields of view in each of a plurality of the wafer dies.
g. The repetitively pulsed laser illuminating source may be a Q switched Nd:YAG laser which is preferably optically pumped by light emitting diodes.
h. Preferably, the electro-optical camera further includes a non-linear optical crystal functioning as a second harmonic generating crystal, placed in a laser beam light path of the repetitively pulsed laser illuminating source, the non-linear optical crystal halving wavelengths of laser beam light generated by the repetitively pulsed laser.
i. Typically, the electro- optical camera further includes a focal plane assembly including at least one detector ensemble including an array of the at least two two-dimensional matrix photo-detectors, each of which includes a high resolution, black and white two-dimensional matrix photo-detector.
j. Typically, each of the at least two two-dimensional matrix photo-detectors includes a two-dimensional CCD matrix photo-detector.
k. The focal plane assembly optically forms a continuous surface of the at least two two-dimensional matrix photo-detectors at a focal plane within the electro-optical camera.
l. The illuminating step includes illuminating, preferably sequentially, each of a plurality of fields of view in each of the plurality of wafer dies using the pulsed laser illuminating source.
m. Acquiring may be performed using an electro-optical camera including at least two two-dimensional matrix photo-detectors simultaneously acquiring images of each of the plurality of fields of view in each of a plurality of the wafer dies.
n. The electro-optical camera may further include a non-linear optical crystal functioning as a second harmonic generating crystal, placed in a laser beam light path of the repetitively pulsed laser illuminating source, the non-linear optical crystal halving wavelengths of laser beam light generated by the repetitively pulsed laser.
o. The electro- optical camera may further include a focal plane assembly including at least one detector ensemble including an array of the at least two two-dimensional matrix photo-detectors, each of which includes a high resolution, black and white two-dimensional matrix photo-detector.
p. Each of the at least two two-dimensional matrix photo-detectors may include a two-dimensional CCD matrix photo-detector.
q. The focal plane assembly optically forms a continuous surface of the at least two two-dimensional matrix photo-detectors at a focal plane within the electro-optical camera.

In accordance with still another preferred embodiment of the present invention which is defined in claims 1 and 6, there is provided an inspection method for inspecting objects including multiple identical regions including using an imager for imaging the multiple identical regions of the objects, while the objects are illuminated and are in motion along a travel path, employing at least one two-dimensional detector array, providing relative motion between the imager and the objects along the travel path, illuminating the objects as they travel along the travel path, and comparing images of individual ones of the multiple identical regions. The imaging step employs a plurality of two-dimensional detector arrays which are arranged to optically form a continuous surface of photodetectors. Illuminating is effected with a pulsed laser illuminator. Providing relative motion includes displacing the objects along the travel path. Providing relative motion may include providing continuous relative motion between the imager and the objects along the travel path.

This method including the steps and features of claim 6 may also include the following features:
a. Providing objects including at least one patterned semiconductor wafer of dies to be inspected for defects,
b. Illuminating may include providing a repetitively pulsed laser illuminating source and illuminating at least one field of view in each of a plurality of wafer dies using the pulsed laser illuminating source
c. Imaging may include acquiring images of the at least one field of view in each of the plurality of wafer dies
d. Comparing includes detecting a wafer defect by comparing the images using a die-to-die comparison method.
e. Detecting may include parallel processing of multiple portions of the images.
f. The at least one field of view may include multiple fields of view and the multiple portions of the images may correspond to the multiple fields of view.
g. The method may also include moving the at least one patterned wafer along an inspection path.
h. Illuminating at least one fields of view may include sequentially illuminating at least one field of view in each of the plurality of wafer dies using the pulsed laser illuminating source.
i. Illuminating at least one fields of view may include illuminating, preferably sequentially, each of a plurality of fields of view in each of the plurality of wafer dies using the pulsed laser illuminating source.
j. Acquiring may include sequentially acquiring images of the at least one field of view in each of the plurality of wafer dies.
k. Acquiring may be performed using an electro-optical camera including at least two two-dimensional matrix photo-detectors simultaneously acquiring images of each of the plurality of fields of view in each of a plurality of the wafer dies.
l. The repetitively pulsed laser illuminating source may be a Q switched Nd:YAG laser which is preferably optically pumped by light emitting diodes.
m. The electro-optical camera may further include a non-linear optical crystal functioning as a second harmonic generating crystal, placed in a laser beam light path of the repetitively pulsed laser illuminating source, the non-linear optical crystal halving wavelengths of laser beam light generated by the repetitively pulsed laser.
n. The electro- optical camera may further include a focal plane assembly including at least one detector ensemble including an array of the at least two two-dimensional matrix photo-detectors, each of which includes a high resolution, black and white two-dimensional matrix photo-detector.
o. Each of the at least two two-dimensional matrix photo-detectors may include a two-dimensional CCD matrix photo-detector.
p. The focal plane assembly optically forms a continuous surface of the at least two two-dimensional matrix photo-detectors at a focal plane within the electro-optical camera.

In accordance with a preferred embodiment of the present invention which is defined in claims 1 and 6, an inspection method for inspecting objects including multiple identical regions may be provided, the method including using an imager for imaging the multiple identical regions of the objects, while the objects are illuminated and are in motion along a travel path, providing relative motion between the imager and the objects along the travel path, illuminating the objects as they travel along the travel path and comparing images of individual ones of the multiple identical regions. The method including the steps and features defined in claim 6 may include the following features:
a. Providing objects including at least one patterned semiconductor wafer of dies to be inspected for defects, wherein illuminating includes providing a repetitively pulsed laser illuminating source and illuminating at least one field of view in each of a plurality of wafer dies using the pulsed laser illuminating source, wherein imaging includes acquiring images of the at least one field of view in each of the plurality of wafer dies; and wherein comparing includes detecting a wafer defect by comparing the images using a die-to-die comparison method.
b. Detecting includes parallel processing of multiple portions of the images.
c. The at least one field of view may include multiple fields of view and the multiple portions of the images correspond to the multiple fields of view.
d. The method may also include moving the at least one patterned wafer along an inspection path.
e. Illuminating at least one field of view may include sequentially illuminating at least one field of view in each of the plurality of wafer dies using the pulsed laser illuminating source.
f. Illuminating at least one field of view may include illuminating each of a plurality of fields of view in each of the plurality of wafer dies, preferably sequentially, using the pulsed laser illuminating source.
g. Acquiring may include sequentially acquiring images of the at least one field of view in each of the plurality of wafer dies.
h. The repetitively pulsed laser illuminating source may be a Q switched Nd:YAG laser, preferably optically pumped by light emitting diodes.

According to another preferred embodiment of the present invention which is defined in claims 1 and 6, an optical inspection system for a microscopic patterned object is provided, the system including a two-dimensional imager operative to image sequential portions of the microscopic patterned object, apparatus for translating the microscopic patterned object relative to the two-dimensional imager, including an illumination trigger operative to generate an illumination activating signal each time the apparatus for translating has brought the object to a new imaging position vis a vis the two-dimensional imager, an illumination source providing an illumination pulse responsive to the illumination trigger; and image acquisition apparatus operative to acquire an image of a portion of the object from the two-dimensional imager responsive to the illumination trigger.

This system including the features defined in claim 1 may include the following features:
a. The illumination pulse has a pulse time small enough such that the motion of the object during the pulse time is smaller than a pixel size of the imager.
b. The apparatus for translating may include apparatus providing continuous motion of the object relative to the two-dimensional imager.
c. The illumination source includes a pulsed laser system.
d. The pulsed laser system may include a Nd:YAG laser having a frequency doubler crystal using at least a second harmonic.
e. The laser may use the third harmonic.
f. The laser may use the fourth harmonic.
g. The pulsed laser system may include an Excimer laser.

According to another preferred embodiment of the present invention defined in claims 1 and 6, a method for electro-optically inspecting a patterned semiconductor wafer of dies for a defect is provided, the method including providing a repetitively pulsed laser illuminating source, illuminating at least one field of view in each of a plurality of wafer dies using the pulsed laser illuminating source, acquiring images of the at least one field of view in each of the plurality of wafer dies; and detecting a wafer defect by comparing the images using a die-to-die comparison method.

This method including the steps and features defined in claim 6 may include the following features:
a. Detecting includes parallel processing of multiple portions of the images.
b. The at least one field of view may include multiple fields of view; and the multiple portions of the images may correspond to the multiple fields of view.
c. The method includes moving the patterned wafer along an inspection path.
d. Illuminating may include sequentially illuminating at least one field of view in each of the plurality of wafer dies using the pulsed laser illuminating source.
e. Illuminating may include illuminating, preferably sequentially, each of a plurality of fields of view in each of the plurality of wafer dies using the pulsed laser illuminating source.
f. Acquiring may include sequentially acquiring images of the at least one field of view in each of the plurality of wafer dies.
g. Acquiring may be performed using an electro-optical camera including at least two two-dimensional matrix photo-detectors simultaneously acquiring images of each of the plurality of the sequentially illuminated fields of view in each of a plurality of the wafer dies.
h. The repetitively pulsed laser illuminating source may be a Q switched Nd:YAG laser which is preferably optically pumped by light emitting diodes.
i. The electro-optical camera may further include a non-linear optical crystal functioning as a second harmonic generating crystal, placed in a laser beam light path of the repetitively pulsed laser illuminating source, the non-linear optical crystal halving wavelengths of the laser beam light generated by the repetitively pulsed laser.
j. The electro- optical camera may further include a focal plane assembly including at least one detector ensemble including an array of the at least two two-dimensional matrix photo-detectors, each of which includes a high resolution, black and white two-dimensional matrix photo-detector.
k. Each of the at least two two-dimensional matrix photo-detectors may include a two-dimensional CCD matrix photo-detector.
l. The focal plane assembly optically forms a continuous surface of the at least two two-dimensional matrix photo-detectors at a focal plane within the electro-optical camera.
m. The method may also include moving the patterned wafer along an inspection path, wherein the acquiring step includes sequentially acquiring an image of the each of the plurality of the sequentially illuminated fields of view in each of a plurality of the wafer dies by using an electro-optical camera including at least two two-dimensional matrix photo-detectors, the at least two two-dimensional matrix photo-detectors simultaneously acquiring images of the each of the plurality of the sequentially illuminated fields of view in each of a plurality of the wafer dies, and the detecting step may include detecting the wafer defect by comparing the sequentially acquired images of the each of the plurality of the sequentially illuminated fields of view in each of a plurality of the wafer dies using a die-to-die comparison method.
n. The electro-optical camera may further include a non-linear optical crystal functioning as a second harmonic generating crystal, placed in a laser beam light path of the repetitively pulsed laser illumination source, the non-linear optical crystal halving wavelengths of the laser beam light generated by the repetitively pulsed laser.
o. The electro-optical camera may further include a focal plane assembly, the focal plane assembly includes at least one detector ensemble, the detector ensemble includes an array of the at least two two-dimensional matrix photo-detectors, each of the at least two two-dimensional matrix photo-detectors is a high resolution, black and white two-dimensional matrix photo-detector.
p. Each of the at least two two-dimensional matrix photo-detectors may be a two-dimensional CCD matrix photo-detector.
q. The focal plane assembly optically forms a continuous surface of the at least two two-dimensional matrix photo-detectors at a focal plane within the electro-optical camera.

According to still another preferred embodiment of the present invention which is defined in claims 1 and 6, a system for electro-optically inspecting a patterned semiconductor wafer of dies for a defect is provided, the system including a repetitively pulsed laser illuminating source, illuminating at least one field of view in each of a plurality of wafer dies, a camera, acquiring images of the at least one field of view in each of the plurality of wafer dies and a wafer defect detector, detecting a wafer defect by comparing the images using a die-to-die comparison method. This system including the features defined in claim 1 may include the following features:
a. The repetitively pulsed laser illuminating source may include a Q switched Nd:YAG laser.
b. The Q switched Nd:YAG laser may be optically pumped by light emitting diodes.
c. The camera may include an electro-optical camera including at least two two-dimensional matrix photo-detectors simultaneously acquiring images of each of the plurality of the sequentially illuminated fields of view in each of a plurality of the wafer dies.
d. The electro-optical camera may further include a focal plane assembly including at least one detector ensemble including an array of the at least two two-dimensional matrix photo-detectors, each of which includes a high resolution, black and white two-dimensional matrix photo-detector.
e. Each of the at least two two-dimensional matrix photo-detectors may include a two-dimensional CCD matrix photo-detector.
f. The focal plane assembly optically forms a coutinous surface of the photo-detectors at a focal plane within the electro-optical camera.

According to still another preferred embodiment of the present invention defined in claims 1 and 6, an electro-optical device for inspecting a patterned semiconductor wafer containing dies for a defect is provided, including a focal plane assembly including at least one detector ensemble including an array of at least two two-dimensional matrix photo-detectors operating with a mechanism for simultaneous acquisition of images of each of at least one illuminated field of view, and preferably a plurality thereof, in each of a plurality of dies. Preferably, each of the at least two two-dimensional matrix photo-detectors includes a two-dimensional CCD matrix photo-detector. The focal plane assembly optically forms a continuous surface of the at least two two-dimensional matrix photo-detectors at a focal plane within the electro-optical device. Typically, the electro-optical camera further includes a non-linear optical crystal functioning as a second harmonic generating crystal, placed in a laser beam light path of the repetitively pulsed laser illuminating source, the non-linear optical crystal halving wavelengths of the laser beam light generated by the repetitively pulsed laser.

According to yet another preferred embodiment of the present invention defined in claims 1 and 6 , a method for electro-optically inspecting a patterned semiconductor wafer containing dies for a defect is provided, including providing a focal plane assembly including at least one detector ensemble including an array of at least two two-dimensional matrix photo-detectors; and simultaneously acquiring images of each of at least one illuminated field of view in each of a plurality of dies.

According to another preferred embodiment of the present invention defined in claims 1 and 6 , a system for electro-optically inspecting a patterned semiconductor wafer of dies for a defect is provided, the system including (a) a mechanism for providing movement of the patterned wafer along an inspection path, (b) a repetitively pulsed laser illumination source for illuminating the patterned wafer, (c) an electro-optical camera including at least two two-dimensional matrix photo-detectors for sequentially acquiring an image of each of a plurality of sequentially illuminated fields of view in each of a plurality of the wafer dies, the at least two two-dimensional matrix photo-detectors operate with a mechanism for simultaneous acquisition of images of the each of the plurality of the sequentially illuminated fields of view in each of a plurality of the wafer dies; and (d) an image processing mechanism for processing the sequentially acquired images of the each of the plurality of the illuminated fields of view in each of a plurality of the wafer dies and detecting a wafer defect by comparing the sequentially acquired images using a die-to-die comparison method. The laser may comprise a Q switched Nd:YAG laser which is preferably optically pumped by light emitting diodes.

In this system, the electro-optical camera may further include a non-linear optical crystal functioning as a second harmonic generating crystal, placed in a laser beam light path of the repetitively pulsed laser illumination source, the non-linear optical crystal halving wavelengths of the laser beam light generated by the repetitively pulsed laser. The electro-optical camera may further include a focal plane assembly, the focal plane assembly includes at least one detector ensemble, the detector ensemble includes an array of the at least two two-dimensional matrix photo-detectors, each of the at least two two-dimensional matrix photo-detectors is a high resolution, black and white two-dimensional matrix photo-detector. Each of the at least two two-dimensional matrix photo-detectors may be a two-dimensional CCD matrix photo-detector. The focal plane assembly optically forms a continuous surface of the photo-detectors at a focal plane within the electro-optical camera.

According to another preferred embodiment of the present invention defined in claims 1 and 6, an electro-optical camera for inspecting a patterned semiconductor wafer of dies for a defect is provided, including a focal plane assembly including at least one detector ensemble, the detector ensemble includes an array of at least two two-dimensional matrix photo-detectors operating with a mechanism for simultaneous acquisition of images of each of a plurality of illuminated fields of view in each of a plurality of the wafer dies. Each of the at least two two-dimensional matrix photo-detectors is preferably a two-dimensional CCD matrix photo-detector. The focal plane assembly optically forms a continuous surface of the at least two two-dimensional matrix photo-detectors at a focal plane within the electro-optical camera.

Also provided, in accordance with still another preferred embodiment of the present invention defined in claims 1 and 6, is an optical inspection system for a microscopic patterned object, the system including a two-dimensional imager operative to image sequential portions of the microscopic patterned object, apparatus for translating the microscopic patterned object relative to the two-dimensional imager, including an illumination trigger operative to generate an illumination activating signal each time the apparatus for translating has brought the object to a new imaging position vis a vis the two-dimensional imager, an illumination source providing an illumination pulse responsive to the illumination trigger; and image acquisition apparatus operative to acquire an image of a portion of the object from the two-dimensional imager responsive to the illumination trigger.

According to this embodiment, the illumination pulse has a pulse time small enough such that the motion of the object during the pulse time is smaller than a pixel size of the imager. The apparatus for translating may include apparatus providing continuous motion of the object relative to the two-dimensional imager. The illumination source includes a pulsed laser system such as an Excimer laser or such as an Nd:YAG laser having a frequency doubler crystal using at least a second harmonic. The laser may use the third harmonic and may use the fourth harmonic.

While the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. An inspection system for inspecting objects (12), including multiple regions (14, 24), wherein said multiple regions (14, 24) are identical except for defects if any, the system comprising:
an imager (18) operative to image multiple regions (14,24) of said objects (12), while said objects (12) are illuminated and are in motion, relative to the image (18), along a travel path, said imager comprising a plurality of two-dimensional matrix photodetectors (52), said plurality of two-dimensional matrix photodetectors (52) optically forming a continuous surface of photodetectors at a focal plane of said imager (18);
a transporter (16) for providing relative motion between the imager (18) and said objects (12) along said travel path;
a pulsed laser object illuminator (26) for illuminating said objects (12) as they travel, relative to the imager (18), along said travel path; and
an image processing mechanism (100) for detecting defects in imaged ones of said multiple regions (14, 24), said image processing mechanism (100) including:
an imaging comparator (96) for comparing images of individual ones of said multiple regions (14, 24); and
a plurality of parallel configured image processing channels (90), different ones of said plurality of processing channels (90) being operative to process image data acquired by said plurality of matrix photodetectors (52) in parallel,
wherein the laser pulse time is shorter than the image pixel dwell time and wherein said imager (18) is operative to form continuous strips (110) of imaged ones of said multiple regions of said objects (12) when imaging said objects (12) by sequential image acquisition of successive fields of view (24A, 24B) forming part of said continuous strips (110), and
the system also comprising at least one beam splitting prism or cube (76, 78) and at least one diagonal surface (72) with highly reflective zones (74) operative to optically couple said ones of said plurality of two-dimensional matrix photodetectors (52).

2. A system according to claim 1, wherein said transporter(16) comprises an illumination trigger operative to generate an illumination activating signal each time the transporter (16) has brought the object (12) to a new imaging position vis a vis the imager (18); and
wherein the pulsed laser object illuminator (26) is operative to provide an illumination pulse responsive to said illumination trigger, the system also comprising image acquisition apparatus (30) operative to acquire an image of a portion of the object (12) from the two-dimensional matrix photodetectors (52) responsive to said illumination trigger.

3. A system according to claim 1 or 2, wherein said plurality of two dimensional matrix photodetectors (52) comprises a respective plurality of photo-sensitive areas (60) which are optically continuous with respect to one another, so as to generate, in combination, an optically continuous surface of photo-sensitive photo-detector areas (66).

4. A system according to claim 1 and wherein said image processing mechanism (100) additionally includes:
a defect detection unit (96); and
an image buffer (94), used by said defect detection unit (96) during operation thereof.

5. A system according to claim 4 and wherein said image processing mechanism includes an image grabber (92) operative to communicate with at least one of said plurality of two-dimensional matrix photodetectors (52) in parallel for communicating with at least one other of said plurality of two-dimensional matrix photodetectors (52) via different ones of said plurality of image processing channels (90), and wherein said image processing mechanism (100) is operative to output a defect file (98) and to write processed outputs of image data acquired by said plurality of two-dimensional matrix photodetectors (52) to said defect file (98).

6. An inspection method for inspecting objects (12), including multiple regions (14, 24), wherein said multiple regions (14, 24) are identical except for defects if any, the method comprising:
imaging said multiple regions (14, 24) of said objects (12), while said objects (12) are illuminated and are in motion, relative to an imager (18), along a travel path, using a plurality of two-dimensional matrix photodetectors (52) optically forming a continuous surface of photodetectors at a focal plane of said imager (18), optically coupling said ones of said plurality of two-dimensional matrix photodetectors (52) using at least one beam splitting prism or cube (76, 78) and at least one diagonal surface (72) with highly reflective zones (74), said imaging resulting in the formation of continuous strips (110) of imaged ones of said multiple regions (14, 24) of said objects (12) when imaging said objects (12) by sequential image acquisition of successive fields of view (24A, 24B) forming part of said continuous strips (110);
providing relative motion between the imager (18) and said objects along said travel path;
pulsed-laser-illuminating said objects (12) as they travel along said travel path;
using an image processing mechanism (100) for detecting defects in imaged ones of said multiple regions (14, 24), said using an image processing mechanism (100) including:
comparing images of individual ones of said multiple regions (14, 24); and
employing a plurality of parallel configured image processing channels (90), different ones of said plurality of image processing channels (90) being operative to process image data acquired by said plurality of matrix photodetectors (52) in parallel,
wherein the laser pulse time is shorter than the image pixel dwell time.

7. A method according to claim 6 and also comprising generating an illumination activating signal each time the transporter (16) has brought the object (12) to a new imaging position *vis a vis* the imager (18), providing an illumination pulse responsive to said illumination activation signal, and acquiring an image of a portion of the object (12) responsive to said illumination activation signal.

8. A method according to claim 6 or 7, wherein said two dimensional matrix photodetectors (52) have a respective plurality of photo-sensitive areas (60) which are optically continuous with respect to one another, so as to generate, in combination, an optically continuous surface of photo-sensitive photo-detector areas (66).

9. A method according to claim 6 and wherein said using an image processing mechanism (100) also comprises:
providing an image buffer (94); and
employing a defect detection unit (96) to use said image buffer (94) during operation of said defect detection unit (96).

10. A method according to claim 9 and wherein said using an image processing mechanism (100) also comprises:
employing an image grabber (92) to communicate with at least one of said plurality of two-dimensional matrix photodetectors (52) in parallel to communicating with at least one other of said plurality of two-dimensional matrix photodetectors (52) via different ones of said plurality of image processing channels (90);
outputting a defect file (98); and
writing processed outputs of image data acquired by said plurality of two-dimensional matrix photodetectors (52) to said defect file (98).

## Patentansprüche

1. Prüfungssystem zum Prüfen von Objekten (12), die mehrere Regionen (14, 24) enthalten, wobei die mehreren Regionen (14, 24) mit der Ausnahme von Defekten, falls vorhanden, identisch sind, das System umfassend:
einen Bilderzeuger (18), der betriebsfähig ist, um mehrere Regionen (14, 24) der Objekte (12) abzubilden, während die Objekte (12) beleuchtet und relativ zu dem Bilderzeuger (18) entlang einer Bewegungsbahn in Bewegung sind, wobei der Bilderzeuger eine Vielzahl von zweidimensionalen Matrix-Fotodetektoren (52) umfasst, wobei die Vielzahl von zweidimensionalen Matrix-Fotodetektoren (52) optisch eine fortlaufende Oberfläche von Fotodetektoren auf einer Fokusebene des Bilderzeugers (18) bildet;
eine Transportvorrichtung (16) zur Bereitstellung von relativer Bewegung zwischen dem Bilderzeuger (18) und den Objekten (12) entlang der Bewegungsbahn;
eine Impulslaser-Objekt-Beleuchtungsvorrichtung (26) zum Beleuchten der Objekte (12), während sie sich relativ zu dem Bilderzeuger (18) entlang der Bewegungsbahn bewegen; und
einen Bildverarbeitungsmechanismus (100) zum Erkennen von Defekten in abgebildeten einen der mehreren Regionen (14, 24), der Bildverarbeitungsmechanismus (100) enthaltend:
einen Abbildungskomparator (96) zum Vergleichen von Bildern von individuellen einen der mehreren Regionen (14, 24); und
eine Vielzahl von parallel konfigurierten Bildverarbeitungskanälen (90), wobei verschiedene eine der Vielzahl von Verarbeitungskanälen (90) betriebsfähig sind, um Bilddaten zu verarbeiten, die parallel von der Vielzahl von Matrix-Fotodetektoren (52) erfasst wurden,
wobei die Laserimpulszeit kürzer als die Bildpixel-Verweilzeit ist und wobei der Bilderzeuger (18) betriebsfähig ist, um fortlaufende Streifen (110) der abgebildeten einen der mehreren Regionen der Objekte (12) zu bilden, wenn die Objekte (12) durch sequenzielle Bilderfassung von aufeinander folgenden Sichtfeldern (24A, 24B), die Teil der fortlaufenden Streifen (110) bilden, abgebildet werden, und
das System außerdem umfassend mindestens ein Strahlen teilendes Prisma oder einen Strahlen teilenden Würfel (76, 78) und mindestens eine diagonale Oberfläche (72) mit hoch reflektierenden Zonen (74), die betriebsfähig sind, um die einen der Vielzahl von zweidimensionalen Matrix-Fotodetektoren (52) optisch zu koppeln.

2. System nach Anspruch 1, wobei die Transportvorrichtung (16) einen Beleuchtungsauslöser umfasst, der betriebsfähig ist, um jedes Mal, wenn die Transportvorrichtung (16) das Objekt (12) in eine neue Abbildungsposition gegenüber dem Bilderzeuger (18) gebracht hat, ein Beleuchtung aktivierendes Signal zu erzeugen; und
wobei die Impulslaser-Objekt-Beleuchtungsvorrichtung (26) betriebsfähig ist, um einen Beleuchtungsimpuls als Reaktion auf den Beleuchtungsauslöser bereitzustellen, das System außerdem umfassend eine Bilderfassungsvorrichtung (30), die betriebsfähig ist, um ein Bild eines Abschnitts des Objekts (12) von den zweidimensionalen Matrix-Fotodetektoren (52) als Reaktion auf den Beleuchtungsauslöser zu erfassen.

3. System nach Anspruch 1 oder 2, wobei die Vielzahl von zweidimensionalen Matrix-Fotodetektoren (52) eine jeweilige Vielzahl von fotoempfindlichen Bereichen (60) umfasst, die in Bezug auf einander optisch fortlaufend sind, um in Kombination eine optisch fortlaufende Oberfläche von fotoempfindlichen Fotodetektor-Bereichen (66) zu erzeugen.

4. System nach Anspruch 1 und wobei der Bildverarbeitungsmechanismus (100) zusätzlich enthält:
eine Defekterkennungseinheit (96); und
einen Bildpuffer (94), der von der Defekterkennungseinheit (96) während des Betriebs davon genutzt wird.

5. System nach Anspruch 4 und wobei der Bildverarbeitungsmechanismus einen Bildgrabber (92) enthält, der betriebsfähig ist, um mit mindestens einem der Vielzahl von zweidimensionalen Matrix-Fotodetektoren (52) parallel für Kommunikation mit mindestens einem anderen der Vielzahl von zweidimensionalen Matrix-Fotodetektoren (52) über verschiedene eine der Vielzahl von Bildverarbeitungskanälen (90) zu kommunizieren, und wobei der Bildverarbeitungsmechanismus (100) betriebsfähig ist, um eine Defektdatei (98) auszugeben und verarbeitete Ausgaben von Bilddaten, die von der Vielzahl von zweidimensionalen Matrix-Fotodetektoren (52) erfasst wurden, in die Defektdatei (98) zu schreiben.

6. Prüfungsverfahren zum Prüfen von Objekten (12), die mehrere Regionen (14, 24) enthalten, wobei die mehreren Regionen (14, 24) mit der Ausnahme von Defekten, falls vorhanden, identisch sind, das Verfahren umfassend:
Abbilden der mehreren Regionen (14, 24) der Objekte (12), während die Objekte (12) beleuchtet und relativ zu einem Bilderzeuger (18) entlang einer Bewegungsbahn in Bewegung sind, unter Verwendung einer Vielzahl von zweidimensionalen Matrix-Fotodetektoren (52), die optisch eine fortlaufende Oberfläche von Fotodetektoren auf einer Fokusebene des Bilderzeugers (18) bilden, optisches Koppeln der einen der Vielzahl von zweidimensionalen Matrix-Fotodetektoren (52) unter Verwendung von mindestens einem Strahlen teilenden Prisma oder Würfel (76, 78) und mindestens einer diagonalen Oberfläche (72) mit hoch reflektierenden Zonen (74), wobei das Abbilden in der Bildung von fortlaufenden Streifen (110) von abgebildeten einen der mehreren Regionen (14, 24) der Objekte resultiert, wenn die Objekte (12) durch sequenzielle Bilderfassung von aufeinander folgenden Sichtfeldern (24A, 24B), die Teil der fortlaufenden Streifen (110) bilden, abgebildet werden;
Bereitstellen von relativer Bewegung zwischen dem Bilderzeuger (18) und den Objekten entlang der Bewegungsbahn;
Impulslaser-Beleuchten der Objekte (12), während sie sich entlang der Bewegungsbahn bewegen;
Verwenden eines Bildverarbeitungsmechanismus (100) zum Erkennen von Defekten in abgebildeten einen der mehreren Regionen (14, 24), das Verwenden eines Bildverarbeitungsmechanismus (100) enthaltend:
Vergleichen von Bildern von individuellen einen der mehreren Regionen (14, 24); und
Nutzen einer Vielzahl von parallel konfigurierten Bildverarbeitungskanälen (90), wobei verschiedene eine der Vielzahl von Bildverarbeitungskanälen (90) betriebsfähig sind, um Bilddaten zu verarbeiten, die parallel von der Vielzahl von Matrix-Fotodetektoren (52) erfasst wurden,
wobei die Laserimpulszeit kürzer als die Bildpixel-Verweilzeit ist.

7. Verfahren nach Anspruch 6 und außerdem umfassend, jedes Mal, wenn die Transportvorrichtung (16) das Objekt (12) in eine neue Abbildungsposition gegenüber dem Bilderzeuger (18) gebracht hat, ein Beleuchtung aktivierendes Signal zu erzeugen, einen Beleuchtungsimpuls als Reaktion auf das Beleuchtungsaktivierungssignal bereitzustellen und ein Bild eines Abschnitts des Objekts (12) als Reaktion auf das Beleuchtungsaktivierungssignal zu erfassen.

8. Verfahren nach Anspruch 6 oder 7, wobei die zweidimensionalen Matrix-Fotodetektoren (52) eine jeweilige Vielzahl von fotoempfindlichen Bereichen (60) umfassen, die in Bezug auf einander optisch fortlaufend sind, um in Kombination eine optisch fortlaufende Oberfläche von fotoempfindlichen Fotodetektor-Bereichen (66) zu erzeugen.

9. Verfahren nach Anspruch 6 und wobei das Verwenden eines Bildverarbeitungsmechanismus (100) außerdem umfasst:
Bereitstellen eines Bildpuffers (94); und
Nutzen einer Defekterkennungseinheit (96) zur Verwendung des Bildpuffers (94) während der Operation der Defekterkennungseinheit (96).

10. Verfahren nach Anspruch 9 und wobei das Verwenden eines Bildverarbeitungsmechanismus außerdem umfasst:
Nutzen eines Bildgrabbers (92), um mit mindestens einem der Vielzahl von zweidimensionalen Matrix-Fotodetektoren (52) parallel zur Kommunikation mit mindestens einem anderen der Vielzahl von zweidimensionalen Matrix-Fotodetektoren (52) über verschiedene eine der Vielzahl von Bildverarbeitungskanälen (90) zu kommunizieren;
Ausgeben einer Defektdatei (98); und
Schreiben von verarbeiteten Ausgaben von Bilddaten, die von der Vielzahl von zweidimensionalen Matrix-Fotodetektoren (52) erfasst wurden, in die Defektdatei (98).

## Revendications

1. Système d'inspection pour inspecter des objets (12) incluant de multiples régions (14, 24), dans lequel lesdites multiples régions (14, 24) sont identiques à l'exception de défauts éventuels, le système comprenant:
un moyen imageur (18) fonctionnant pour imager de multiples régions (14, 24) desdits objets (12) tandis que lesdits objets (12) sont éclairés et sont en déplacement par rapport au moyen imageur (18) le long d'une voie de déplacement, ledit moyen imageur comprenant une pluralité de photodétecteurs en matrice bidimensionnelle (52), ladite pluralité de photodétecteurs en matrice bidimensionnelle (52) formant optiquement une surface continue de photodétecteurs au niveau d'un plan focal dudit moyen imageur (18);
un moyen de transport (16) pour produire un déplacement relatif entre le moyen imageur (18) et lesdits objets (12) le long de ladite voie de déplacement;
un moyen d'éclairage d'objet par laser pulsé (26) pour éclairer lesdits objets (12) pendant qu'ils se déplacent par rapport audit moyen imageur (18) le long de ladite voie de déplacement; et
un mécanisme de traitement d'image (100) pour détecter des défauts dans certaines régions imagées desdites multiples régions (14, 24), ledit mécanisme de traitement d'image (100) incluant:
un comparateur d'image (96) pour comparer les images de régions individuelles desdites multiples régions (14, 24); et
une pluralité de canaux de traitement d'image configurés parallèlement (90), différents canaux de ladite pluralité de canaux de traitement (90) étant en fonctionnement pour traiter des données d'image acquises par ladite pluralité de photodétecteurs en matrice (52) en parallèle,
dans lequel la durée d'impulsion laser est plus courte que la durée de persistance de pixel d'image et dans lequel ledit moyen imageur (18) fonctionne pour former des bandes continues (110) de certaines régions imagées desdites multiples régions desdits objets (12) lors de la formation d'image desdits objets (12) par acquisition d'image séquentielle de champs de vue successifs (24A, 24B) formant une partie desdites bandes continues (110), et
le système comprenant également au moins un prisme ou cube de séparation de faisceau (76, 78) et au moins une surface diagonale (72) avec des zones hautement réfléchissantes (74) fonctionnant pour coupler optiquement lesdits certains photodétecteurs de ladite pluralité de photodétecteurs en matrice bidimensionnelle (52).

2. Système selon la revendication 1, dans lequel ledit moyen de transport (16) comprend un déclencheur d'éclairage fonctionnant pour générer un signal d'activation d'éclairage chaque fois que le moyen de transport (16) a amené l'objet (12) à une nouvelle position de formation d'image vis-à-vis du moyen imageur (18); et
dans lequel ledit moyen d'éclairage d'objet par laser pulsé (26) fonctionne pour fournir une impulsion d'éclairage en réponse audit déclencheur d'éclairage, le système comprenant également un appareil d'acquisition d'image (30) fonctionnant pour acquérir une image d'une partie de l'objet (12) à partir des photodétecteurs en matrice bidimensionnelle (52) en réponse audit déclencheur d'éclairage.

3. Système selon la revendication 1 ou 2, dans lequel ladite pluralité de photodétecteurs en matrice bidimensionnelle (52) comprend une pluralité respective de zones photosensibles (60) qui sont optiquement contiguës les unes par rapport aux autres de façon à générer, en combinaison, une surface optiquement continue de zones de photodétecteurs photosensibles (66).

4. Système selon la revendication 1, dans lequel ledit mécanisme de traitement d'image (100) inclut en outre:
une unité de détection de défaut (96); et
un tampon d'image (94) utilisé par ladite unité de détection de défaut (96) pendant son fonctionnement.

5. Système selon la revendication 4, dans lequel ledit mécanisme de traitement d'image (100) inclut un moyen de prise d'image (92) fonctionnant pour communiquer avec au moins un de ladite pluralité de photodétecteurs en matrice bidimensionnelle (52) en parallèle pour communiquer avec au moins un autre de ladite pluralité de photodétecteurs en matrice bidimensionnelle (52) via certains différents de ladite pluralité de canaux de traitement d'image (90), et dans lequel ledit mécanisme de traitement d'image (100) fonctionne pour produire en sortie un fichier de défauts (98) et pour écrire des sorties traitées de données d'image acquises par ladite pluralité de photodétecteurs en matrice bidimensionnelle (52) dans ledit fichier de défaut (98).

6. Procédé d'inspection pour inspecter des objets (12) incluant de multiples régions (14, 24), dans lequel lesdites multiples régions (14, 24) sont identiques à l'exception de défauts éventuels, le procédé comprenant:
la formation d'image desdites multiples régions (14, 24) desdits objets (12) tandis que lesdits objets (12) sont éclairés et sont en déplacement par rapport à un moyen imageur (18) le long d'une voie de déplacement, l'utilisation d'une pluralité de photodétecteurs en matrice bidimensionnelle (52) formant optiquement une surface continue de photodétecteurs au niveau d'un plan focal dudit moyen imageur (18), le couplage de façon optique desdits certains photodétecteurs de ladite pluralité de photodétecteurs en matrice bidimensionnelle (52) en utilisant au moins un prisme ou cube de séparation de faisceau (76, 78) et au moins une surface diagonale (72) avec des zones hautement réfléchissantes (74), ladite formation d'image conduisant à la formation de bandes continues (110) de certaines régions imagées desdites multiples régions (14, 24) desdits objets (12) lors de la formation d'image desdits objets (12) par une acquisition d'image séquentielle de champs de vue successifs (24A, 24B) formant une partie desdites bandes continues (110);
la production d'un déplacement relatif entre le moyen imageur (18) et lesdits objets le long de ladite voie de déplacement;
l'éclairage laser pulsé desdits objets (12) pendant leur déplacement le long de ladite voie de déplacement;
l'utilisation d'un mécanisme de traitement d'image (100) pour détecter des défauts dans certaines régions imagées desdites multiples régions (14, 24), ladite utilisation d'un mécanisme de traitement d'image (100) incluant:
la comparaison d'images de certaines individuelles desdites multiples régions (14, 24); et
l'utilisation d'une pluralité de canaux de traitement d'image configurés en parallèle (90), différents canaux de ladite pluralité de canaux de traitement d'image (90) étant en fonctionnement pour traiter des données d'image acquises par ladite pluralité de photodétecteurs en matrice (52) en parallèle,
dans lequel la durée d'impulsion laser est plus courte que la durée de persistance de pixel d'image.

7. Procédé selon la revendication 6, comprenant également la génération d'un signal d'activation d'éclairage chaque fois que le moyen de transport (16) a amené l'objet (12) à une nouvelle position de formation d'image vis-à-vis du moyen imageur (18), la fourniture d'une impulsion d'éclairage en réponse audit signal d'activation d'éclairage et l'acquisition d'une image d'une partie de l'objet (12) en réponse audit signal d'activation d'éclairage.

8. Procédé selon la revendication 6 ou 7, dans lequel lesdits photodétecteurs en matrice bidimensionnelle (52) présentent une pluralité respective de zones photosensibles (60) qui sont optiquement continues les unes par rapport aux autres, de façon à générer, en combinaison, une surface optiquement continue de zones de photodétecteurs photosensibles (66).

9. Procédé selon la revendication 6, dans lequel l'utilisation d'un mécanisme de traitement d'image (100) comprend également:
la fourniture d'un tampon d'image (94); et
l'utilisation d'une unité de détection de défaut (96) pour utiliser ledit tampon d'image (94) pendant le fonctionnement de ladite unité de détection de défaut (96).

10. Procédé selon la revendication 9, dans lequel l'utilisation d'un mécanisme de traitement d'image (100) comprend également:
l'utilisation d'un moyen de saisie d'image (92) pour communiquer avec au moins un de ladite pluralité de photodétecteurs en matrice bidimensionnelle (52) en parallèle à la communication avec au moins un autre de ladite pluralité de photodétecteurs en matrice bidimensionnelle (52) via certains différents de ladite pluralité de canaux de traitement d'image (90);
la production en sortie d'un fichier de défauts (98); et
l'écriture des sorties traitées de données d'image acquises par ladite pluralité de photodétecteurs en matrice bidimensionnelle (52) dans ledit fichier de défauts (98).
